# EUROPEAN PATENT SPECIFICATION

(11) **EP 2 844 114 B1**
(45) Date of publication and mention of the grant of the patent: **06.11.2019**
(21) Application number: 12766244.3
(22) Date of filing: 10.09.2012
(51) Int. Cl.: A47G 9/02, A41D 13/002, D04B 1/02

(54) **THERMAL BLANKETS**
WÄRMEDECKEN
COUVERTURES THERMIQUES

(30) Priority: 04.05.2012 US 201213464463
(43) Date of publication of application: 11.03.2015
(73) Proprietor: MMI-IPCO, LLC, Lawrence, MA 01842 (US)
(72) Inventor: ROCK, Moshe, Brookline, Massachusetts 02446 (US); VAINER, Gadalia, Melrose, Massachusetts 02176 (US); HUNTER, Jane, Manassas, Virginia 20111 (US); COSTELLO, David, Marblehead, Massachusetts 01945 (US); WEBSTER, Marcus, Pelham, New Hampshire 03076 (US); LIE, William K., Methuen, Massachusetts 01844 (US); DIONNE, Edward P., Oxford, Maine 04270 (US)
(74) Representative: Peterreins Schley
(86) International application number: PCT/US2012/054371
(87) International publication number: WO 2013/165456

(56) References cited:
- WO-A1-2011/066000
- FR-A1- 2 867 667
- US-A1- 2006 277 950
- US-A1- 2012 070 608

## Description

### TECHNICAL FIELD

This disclosure relates to thermal blankets, and more particularly to thermal blankets that include a unitary engineered thermal fabric.

### BACKGROUND

Thermal layering in home textile articles, such as blankets and the like, is considered one of the more effective means for personal insulation available. However, layered fabrics typically add bulk, and it is often difficult to provide levels of insulation appropriate for all areas of a user's body, as different areas of the body have different sensitivities to temperature and different abilities to thermo-regulate, e.g., by sweating.

The same issues also appear in other products, such as upholstery covers, e.g. for home furnishings, for furniture in institutional and contract markets, such as for offices, hotels, conference centers, etc., and for seating in transportation vehicles, such as automobiles, trucks, trains, buses, etc.

Document WO 2011/066000 A1 discloses a thermal blanket according to the preamble of claim 1.

### SUMMARY

In one aspect of the disclosure not forming part of the invention, the disclosure features a thermal blanket comprising a unitary fabric element having a multiplicity of predetermined discrete regions of contrasting insulative capacities arranged based on insulative needs of corresponding regions of a user's body. At least two of the predetermined, discrete regions of contrasting insulative capacities comprise, in one or more first discrete regions of the unitary fabric element, loop yarn having a first pile height, and in one or more other discrete regions of the unitary fabric element, loop yarn having another pile height different from and relatively greater than the first pile height. The one or more first discrete regions correspond to one or more regions of the user's body having first insulative needs, and the one or more other discrete regions correspond to one or more regions of the user's body having other insulative needs different from and relatively greater than the first insulative needs.

Implementations of this aspect of the disclosure also include one or more of the following features. The thermal blanket consists essentially of the unitary fabric element. Additional unitary fabric elements are included in the thermal blanket. Each of the multiplicity of predetermined discrete regions extends generally across a width of the thermal blanket in a band form. The one or more first discrete regions correspond to one or more of an upper torso, head, and hip of the user's body. The one or more other discrete regions correspond to one or more of lower legs and feet, arms, and shoulders of the user's body. The unitary fabric element comprises a single face raised fabric and/or a double face raised fabric. The unitary fabric element comprises warp knit yarns and/or fibers, circular knit yarns and/or fibers, regular plaited yarns and/or fibers, reverse plaited yarns and/or fibers, or woven yarns and/or fibers. The unitary fabric element comprises a surface containing a chemical resin or a chemical binder for improved pilling resistance and/or abrasion resistance. An air permeability control element is laminated with the unitary fabric element to form a unitary fabric laminate. The air permeability control element is selected from the group consisting of: perforated membrane, crushed adhesive as a layer, foam adhesive as a layer, discontinuous breathable membrane, porous hydrophobic breathable film, and non-porous hydrophilic breathable film. An air and liquid water impermeable element is laminated with the unitary fabric element to form a unitary fabric laminate. The air and liquid water impermeable element is in the form of a breathable film select from the group consisting of: porous hydrophobic film and non-porous hydrophilic film. The unitary fabric element comprises yarns and/or fibers of one or more materials selected from the group consisting of: synthetic yarn and/or fibers, natural yarn and/or fibers, regenerate yarn and/or fibers, and specialty yarn and/or fibers. The synthetic yarn and/or fibers are selected from the group consisting of: polyester yarn and/or fibers, nylon yarn and/or fibers, acrylic yarn and/or fibers, polypropylene yarn and/or fibers, and continuous filament flat or textured or spun yarn made of synthetic staple fibers. The natural yarn and/or fibers are selected from the group consisting of: cotton yarn and/or fibers and wool yarn and/or fibers. The regenerate yarn and/or fibers are selected from the group consisting of: rayon yarn and/or fibers. The specialty yarn and/or fibers are selected from the group consisting of flame retardant yarn and/or fibers. The flame retardant yarn and/or fibers are selected from the group consisting of: flame retardant aramid yarn and/or fibers, and flame retardant polyester yarn and/or fibers. The one or more first discrete regions having a first pile height comprises loop yarn formed to a relatively lower pile using low sinker and/or shrinkable yarn. The one or more first discrete regions having a first pile height comprises loop yarn formed to a relatively lower pile height of up to about 1 mm. The one or more other discrete regions having another pile height different from and relatively greater than the first pile height comprises loop yarn formed to a relatively higher pile height in the range of greater than about 1 mm up to about 20 mm in a single face fabric. The one or more other discrete regions having another pile height different from and relatively greater than the first pile height comprises loop yarn formed to a relatively higher pile height in the range of greater than about 2 mm up to about 40 mm in a double face fabric.

In another aspect not forming part of the invention, the disclosure features a thermal blanket comprising an inner fabric layer, an outer fabric layer, and an insulating fabric layer attached to the outer fabric layer. The insulating fabric layer is a textile fabric having a raised surface facing towards the outer fabric layer. The raised surface includes a plurality of first discrete regions having a first pile height interspersed among a plurality of other discrete regions having contrasting pile height relatively greater than the first pile height.

Implementations of this aspect of the disclosure may also include one or more of the following features. The insulating-filler fabric layer has a terry sinker loop surface including a plurality of discrete regions of no terry sinker loop interspersed among regions of terry sinker loop. The insulating fabric layer has a weight of about 1 ounce per square yard to about 12 ounces per square yard (about 33.8 grams per square meter to about 338 grams per square meter). The insulating-filler fabric layer is quilted to one or both of the inner fabric layer and the outer fabric layer. The insulating-filler fabric layer is stitched to one or both of the inner fabric layer and the outer fabric layer along a periphery of the thermal blanket. The insulating-filler fabric layer is laminated to one or both of the inner fabric layer and the outer fabric layer. The insulating-filler fabric layer is constructed to include face yarn that is positioned generally perpendicular to stitching or backing yarn. The insulating-filler fabric layer has a thickness (bulk) of about 0.1 inch to about 4.0 inches (about 2.5 mm to about 10.2 cm). The first pile height in the first discrete regions is zero. Yarns forming the first discrete regions are relatively finer that yarns forming the other discrete regions. Yarns forming the first discrete regions have a denier per filament (dpf) of about 0.3 to about 5.0. The insulating-filler fabric layer provides insulation of about 0.2 clo/oz² to about 1.6 clo/oz² (1 clo = 0.155 m²K/W). The inner fabric layer comprises a woven fabric or a knit fabric. The knit fabric has single jersey construction, double knit construction, warp knit construction, or mesh construction. The inner fabric layer has air permeability of about 5 ft³/ft²/min to about 300 ft³/ft²/min, tested according to ASTM D-737 under a pressure difference of 1/2 inch of water (125 Pa) (about 146.5 m³/m²/h and 8,790 m³/m²/h at 200 Pa) across the inner fabric layer. The outer fabric layer has air permeability of about 1 ft³/ft²/min to about 100 ft³/ft²/min, tested according to ASTM D-737 under a pressure difference of 1/2 inch of water (125 Pa) across the outer fabric layer (about 29.3 m³/m²/h and 2,930 m³/m²/h at 200 Pa). The outer fabric layer is treated with durable water repellent, an abrasion resistant coating, camouflage, or infrared radiation reduction. At least one of the inner fabric layer, the outer fabric layer, and the insulating-filler fabric layer includes flame-retardant material and/or is treated to provide flame-retardance. A waterproof membrane is laminated to an inner surface of the outer fabric layer, and disposed between the outer fabric layer and the insulating-filler fabric layer. The waterproof membrane is a vapor permeable membrane or is selected from a porous hydrophobic membrane, a hydrophilic non-porous membrane, and an electrospun membrane.

According to the invention, the disclosure features a thermal blanket comprising an inner fabric layer, an outer fabric layer, and a unitary fabric element between the inner fabric layer and the outer fabric layer. The unitary fabric element has a multiplicity of predetermined discrete regions of contrasting insulative capacities. The discrete regions are arranged based on insulative needs of corresponding regions of a user's body. At least two of the predetermined, discrete regions of contrasting insulative capacities comprise, in one or more first discrete regions of the unitary fabric element, loop yarn having a first pile height and/or a first pile density, the one or more first discrete regions corresponding to one or more regions of the user's body having first insulative needs, and in one or more other discrete regions of the unitary fabric element, loop yarn having a second pile height and/or a second pile density. The second pile height is different from and relatively greater than the first pile height and/or the second pile density is different from and relatively greater than the first pile density. The one or more other discrete regions correspond to one or more regions of the user's body having other insulative needs different from and relatively greater than the first insulative needs; and the outer layer comprises a multiplicity of predetermined discrete regions of contrasting insulative capacities corresponding to the multiplicity of predetermined discrete regions of contrasting insulative capacities of the unitary fabric element.

According to the invention, the thermal blanket may also include one or more of the following features. The outer fabric layer comprises a jacquard pattern to be exposed as an exterior surface of the thermal blanket. The inner fabric layer and/or the outer fabric layer comprise a light weight woven or knit having a density of about 2 oz/yard² to about 6 oz/yard² (about 67.7 grams per square meter to about 203.1 grams per square meter). The inner fabric layer and/or the outer fabric layer comprise a knit having a density of about 1.0 oz/yard² to about 10.0 oz/yard² (about 33.8 grams per square meter to about 338 grams per square meter). The unitary fabric element is connected to the outer fabric layer and connected to the inner fabric layer by stitching or quilting. The inner layer comprises a multiplicity of predetermined discrete regions of contrasting (or otherwise different) insulative capacities corresponding to the multiplicity of predetermined discrete regions of contrasting insulative capacities of the unitary fabric element. The multiplicity of predetermined discrete regions of the inner fabric comprises: in one or more in one or more first discrete regions of the inner fabric corresponding to the one or more first discrete regions of the unitary fabric element, loop yarn having a third pile height and/or a third pile density, and, in one or more other discrete regions of the inner fabric corresponding to the one or more other discrete regions of the unitary fabric element, loop yarn having a fourth pile height and/or a fourth pile density. The fourth pile height is different from and relatively greater than the third pile height, and/or the fourth pile density is different from and relatively greater than the third pile density. The multiplicity of predetermined discrete regions of the outer fabric comprises: in one or more in one or more first discrete regions of the outer fabric corresponding to the one or more first discrete regions of the unitary fabric element, loop yarn having a third pile height and/or a third pile density, and, in one or more other discrete regions of the outer fabric corresponding to the one or more other discrete regions of the unitary fabric element, loop yarn having a fourth pile height and/or a fourth pile density. The fourth pile height is different from and relatively greater than the third pile height, and/or the fourth pile density is different from and relatively greater than the third pile density. The unitary fabric element has an air permeability of about 80 CFM to about 200 CFM in the one or more first discrete regions, and an air permeability of about 200 CFM to about 350CFM in the one or more other discrete regions. Different regions of the thermal blanket have substantially the same permeability as the respective regions of the unitary fabric element. The loop yarn in different regions of the one or more second discrete regions of the unitary fabric element have different pile densities. The loop yarn in different regions of the one or more second discrete regions of the unitary fabric element have different pile densities. Different regions of the plurality of other discrete regions have different pile densities.

Other features, objects, and advantages of the invention will be apparent from the description and drawings, and from the claims.

### DESCRIPTION OF DRAWINGS

FIG. 1 is a representation of the surface of a unitary engineered thermal fabric formed with an intricate geometric pattern.
FIG. 2 is a perspective view of a unitary engineered thermal fabric, with regions of relatively high pile, regions of relatively low pile, and regions of no pile.
FIG. 3 is a diagrammatic plan view of a thermal blanket with regions of contrasting insulative capacity and performance, arranged by body mapping concepts.
FIG. 3A is a diagrammatic top view of a segment of another thermal blanket with regions of contrasting insulative capacity and performance.
FIG. 4 is diagrammatic plan view of another thermal blanket with band-form regions of contrasting insulative capacity and performance.
FIG. 4A is a diagrammatic plan view of a segment of another thermal blanket with regions of contrasting insulative capacity and performance.
FIG. 5 is an end section view of a unitary engineered thermal fabric, with regions of relatively greater bulk, regions of no bulk, and regions of relatively lesser bulk on one surface.
FIG. 6 is an end section view of another unitary engineered thermal fabric, with regions of relatively greater bulk, regions of no bulk, and regions of relatively lesser bulk on both surfaces.
FIG. 7 is a perspective view of a segment of a circular knitting machine.
FIGS. 8-14 are sequential views of a cylinder latch needle in a reverse plaiting circular knitting process, e.g., for use in forming a unitary engineered thermal fabric.
FIG. 15 is a diagrammatic end section view of a tubular knit unitary engineered thermal fabric formed during knitting.
FIGS. 16 and 17 are diagrammatic end section views of unitary engineered thermal fabrics, finished on one surface (FIG. 16) or finished on both surfaces (FIG. 17), respectively.
FIG. 18 is an end section view of an insulated composite fabric.
FIG. 19 is an end section view of an insulating-filler fabric in the form of a double face warp knit fabric.
FIG. 20 is an end section view of an insulating-filler fabric in the form of a double face knit fabric with reverse plaited terry sinker loop knit construction.
FIG. 21 is an end section view of an insulating-filler fabric in the form of a single face fabric.
FIG. 22 is a side section view of a unitary engineered thermal fabric.
FIG. 23 is end section view of insulated composite fabric having a light-duty construction.
FIG. 24 is end section view of insulated composite fabric having a medium-duty construction.
FIG. 25 is end section view of insulated composite fabric having a heavy-duty construction.
FIG. 26 is an end section view of an example of an insulated composite fabric for use in a first region of a thermal blanket.
FIG. 27 is an end section view of an example of an insulated composite fabric for use in a second region of a thermal blanket.
FIG. 28 is a plan view of an insulating-filler fabric having a pile surface that includes no pile regions interspersed among regions of pile.
FIGS. 29A to 29E are end section views illustrating insulating-filler fabrics having void regions (i.e., regions of relatively lower pile or no pile).
FIGS. 30A to 30C are end section views of alternative examples of an insulated composite fabric laminate.
FIG. 31A is an end section view of a two layer insulated composite fabric.
FIG. 31B is an end section view of a two layer insulated composite fabric laminate.
FIG. 32 is an end section view of an insulated composite fabric having a waterproof membrane.
FIGS. 33A is an infra-red photo of a thermal blanket over a thermal object, the thermal blanket being formed of a unitary engineered thermal fabric.
FIGS. 33B is an infra-red photo of a thermal blanket over a thermal object, the thermal blanket being formed of a composite fabric including an inner fabric layer, an outer fabric layer, and the unitary engineered thermal fabric of FIG. 33A between the inner and the outer fabric layers.

### DETAILED DESCRIPTION

A thermal blanket, e.g., a textile home furnishings blanket or an outdoor blanket, may be tailored to the insulative requirements of different regions of the projected user's body, thus to optimize the comfort level of the person while sleeping. In most cases, the regions of a person's lower legs and feet and a person's arms and shoulders tend to be relatively more susceptible to cold and thus it will be desirable to provide a relatively higher level of insulation, e.g. relatively higher pile height and/or higher fiber or pile density, for greater comfort and sleep, while, in contrast, the region of a person's upper torso and regions of the person's hips and head, especially from the sides, tend to require relatively less insulation. In some implementations not forming part of the invention, the thermal blanket is a stand-alone, unitary engineered thermal fabric with regions of contrasting insulative capacity and performance arranged by body mapping concepts. Different regions of the unitary engineered thermal fabric can be formed of yarns having the same denier or different deniers. The thermal blanket can also be a composite fabric formed by stitching, quilting, attaching the unitary engineered thermal fabric with additional layers, or inserting the unitary engineered thermal fabric between two layers, as long as this fall within the scope of the claims.

The term "pile," as used herein, includes pile surfaces formed by any desired method, including but not limited to: loops, cut loops, loops cut on the knitting machine, loops cut off the knitting machine (i.e., after the fabric is removed from the knitting machine), and raised fibers.

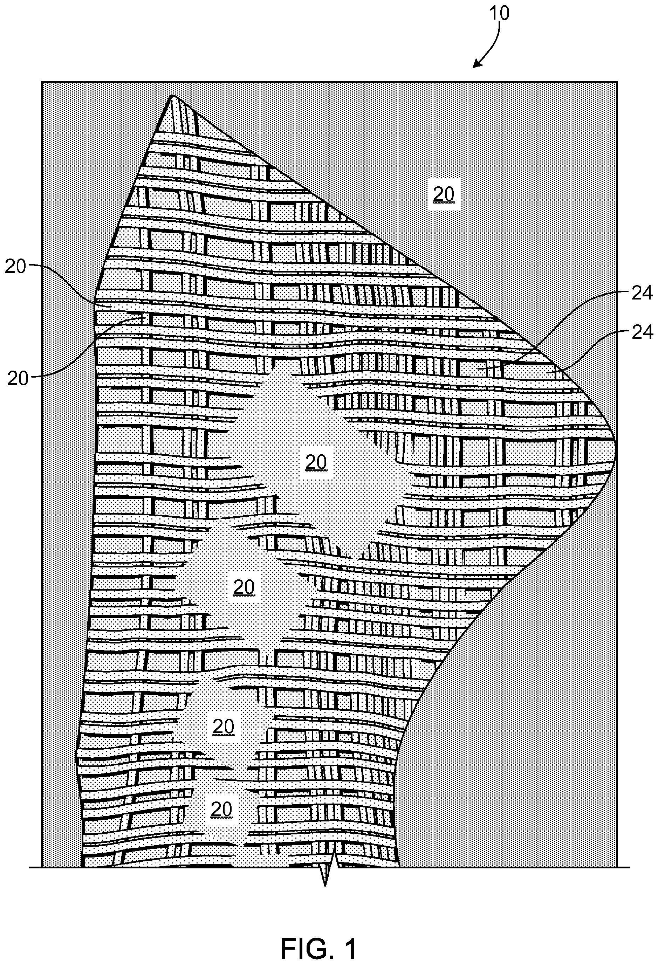

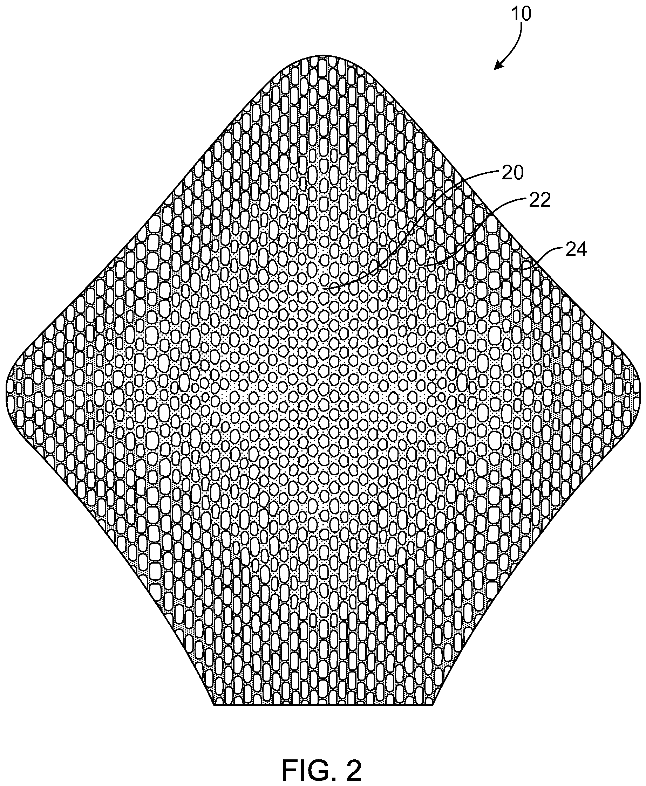

Referring to FIGS. 1 and 2, a unitary engineered thermal fabric 10 suitable for use in a thermal blanket defines one or more regions of contrasting performance, e.g., insulation, wind-blocking, air circulation, etc. The engineered thermal fabric including regions of relatively high pile 20, regions of relatively low pile 22 and regions of no pile 24 formed selectively across the fabric in correlation with body regions preferably desiring or requiring relatively higher insulation, intermediate insulation, and little or no insulation, respectively. Referring to FIG. 1, in some implementations, the unitary engineered thermal fabric 10 may have regions 24 of relatively higher pile interspersed with regions 20 of no pile arranged in intricate patterns, e.g., plaids, stripes, or other geometric or abstract patterns.

In some implementations, regions having different thermal insulation properties can also be formed on a unitary engineered thermal fabric by forming regions of pile having different pile densities. The pile in the different regions can have the same height or different heights.

Engineered thermal fabrics are created, and engineered thermal fabric articles, including thermal blankets, are formed of such engineered thermal fabrics, for the purpose of addressing thermal insulation and comfort level using the unitary engineered thermal fabric. The engineered thermal fabric articles reduce dependence on using multiple layers, while providing insulation and comfort. The engineered thermal fabric articles, e.g. garments and home furnishings, such as blankets and the like, provide selected contrasting levels of insulation correlated to the requirements and/or desires of the underlying regions of the body, to create an improved comfort zone suited for a wide variety of thermal insulation needs.

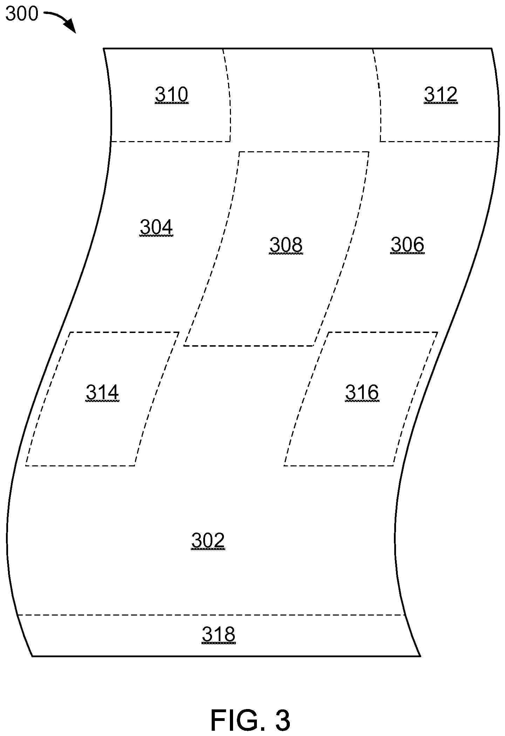

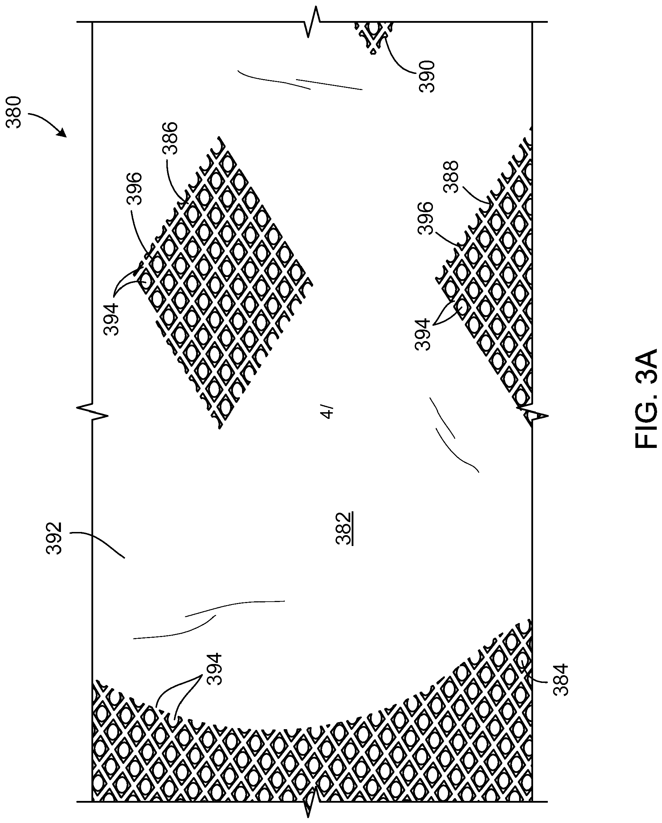

Referring to FIG. 3, an engineered thermal blanket 300 is shown spread for use on a bed. The blanket, not forming part of the invention, may be formed of a unitary engineered thermal fabric, such as the fabric 10 shown in FIGS. 1 and 2 having features discussed above. In particular, the engineered thermal fabric can be a single face raised fabric or double face raised fabric, and the fabric may be warp knit, circular knit, or woven. The region 302 of the person's lower legs and feet and the regions 304, 306 of the person's arms and shoulders have relatively higher pile height and/or relatively higher fiber density. In contrast, the region 308 of the person's upper torso and the regions 310, 312 and the regions 314, 316 adjacent to the person's head and hips, respectively, have relatively low pile or no pile, e.g. depending in personal preference, seasonal conditions, etc. The region 318 below the feet has no pile or low pile, as it is typically tucked beneath the mattress. The fabric of the blanket has a three dimensional geometry, where the thickness of the surfaces of the insulative regions of the head, arms and shoulders, and lower torso, legs and feet are typically in velour, loop, terry in raised surface or sheared/cut loop or as formed.

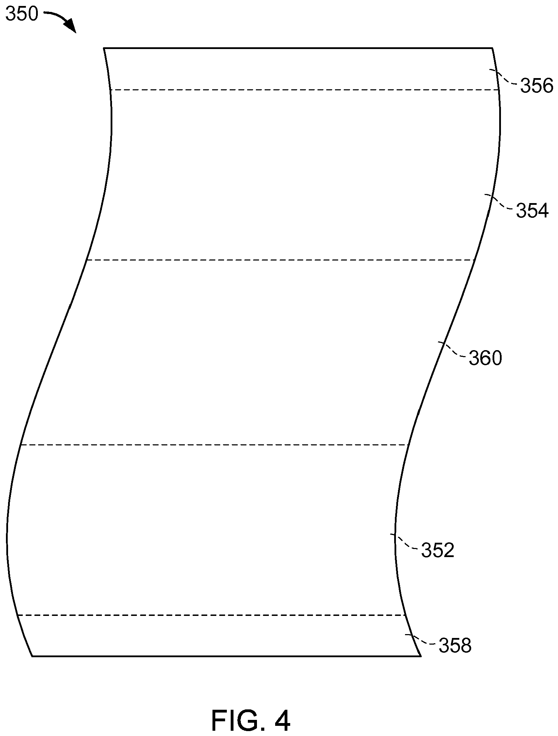

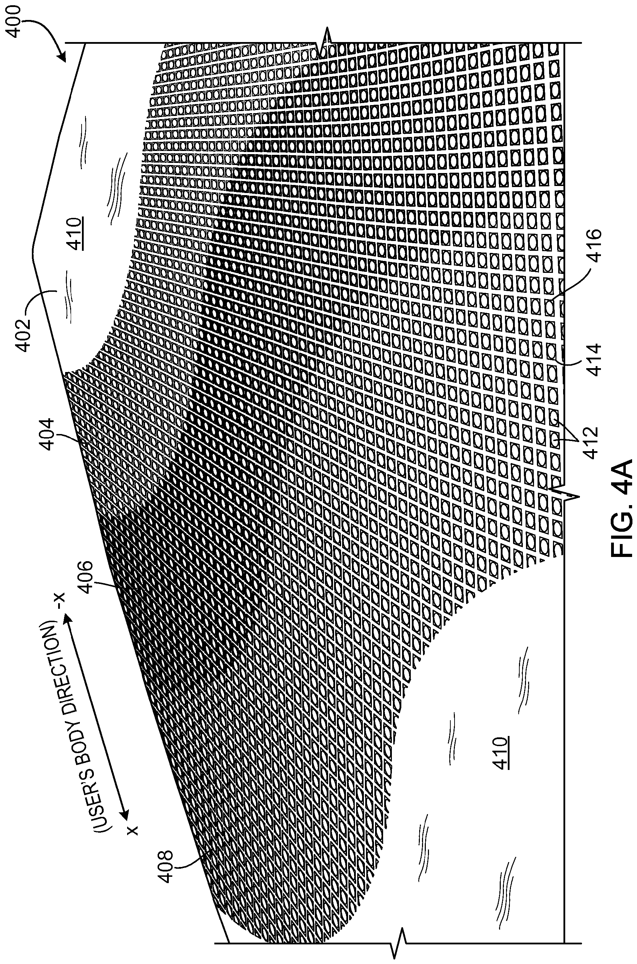

Referring to FIG. 4, another engineered thermal blanket 35, not forming part of the invention, is also formed of a unitary engineered thermal fabric is shown spread for use on a bed. In this implementation, the engineered thermal blanket 350, compared to the engineered thermal blanket 300, is simplified for purposes of manufacture. The regions of contrasting insulative capacity and performance are arranged in band form, extending across the blanket. A lower band region 352 having relatively higher pile height and/or relatively higher fiber density is positioned to extend generally across the person's lower torso, legs and feet and an upper band region 354 also of relatively higher pile height and/or relatively higher fiber density is positioned to extend generally across the person's arms and shoulders. At the upper and lower extremities, respectively, of the blanket 350, an upper band region 356 of relatively low pile or no pile is positioned to extend generally across the person's head and a lower band region 358 of relatively low pile or no pile is positioned to be folded beneath the blanket. In between region 352 and 354, an intermediate region 360, also of relatively low pile or no pile, is positioned to extend generally across the person's upper torso.

As described above, the surfaces of the region 354 of the head, arms, and shoulders, and the region 352 of the lower torso, legs, and feet are plain velour, while the upper band region 356 and intermediate region 360 are low pile. Typically, the yarn and the pile density are maintained constant for all regions, again for simplicity of manufacture. The vertical widths of the respective regions represented in the drawing are by way of example only. Regions of any dimension can be arranged, tailored, e.g., for use by persons of different ages and different genders, etc. and for other factors, such as seasonality, etc.

Although particular patterns, e.g., formed by high pile, low pile and/or no pile (patterned with high pile regions and low pile regions, high pile regions and no pile regions, low pile regions and no pile regions, and/or high pile regions, low pile regions, and no pile regions), are shown in FIGS. 1 and 2 for the unitary engineered thermal fabrics and in FIGS. 3 and 4 for the thermal blankets, the unitary engineered thermal fabrics and the thermal blankets can have any suitable patterns, e.g., based on the desired thermal insulation properties. The thermal blankets can be part of a bedding system and can work in synergy with other bedding components, e.g., linen, sheets, other blankets, and comforters, in order to provide comfort and thermal insulation to the user.

For example, FIG. 3A shows a segment of a thermal blanket 380 having a patterned surface 392 including pile regions 382, 384, 386, 388, 390. In some implementations, all of the pile on the patterned surface 392 has the same pile height. However, the pile regions 384, 386, 388, 390 are patterned to have a lower pile density than the pile density in the pile region 382. In particular, the pile regions 384, 386, 388, 390 include pile 386, 394 separated by no pile or low pile regions 388, 396. The pile region 386 can provide higher thermal insulation than the pile regions 384, 386, 388, 390 due to the higher pile density. The pile in different pile regions 382, 384, 386, 388, 390 can have the same height and/or density, or can have different heights and/or densities, e.g., to provide a thermal insulation gradient.

In some implementations, one or more of the pile regions 384, 386, 388, 390 each can have a pattern formed of contrasting pile heights and/or the same pile height with contrasting pile densities. In the example shown in FIG. 3A, all of the pile regions 384, 386, 388, 390 have the same pile density and the same pattern, with relatively high pile in the circular or oval parts and grid parts 394 and relatively low pile or no pile the remaining regions 396. In addition to the desired thermal properties, the patterned regions 384, 386, 388, 390 provide aesthetic views to the blanket 380.

The different pile regions can have different pile densities. Some pile regions can have 100% pile or a full raised surface, while some other regions can have less than 100% pile. Accordingly, using different pile densities in different pile regions, the regions can provide different thermal properties and aesthetic views even when they have the same pattern. The thermal blanket 380 can have a double face finish raised on both sides or a single face finish raised only on a single side.

In another example shown in FIG. 4A, a thermal blanket 400 has multiple band regions 402, 404, 406, 408 extending a width of the thermal blanket (similar to the band regions 354, 360 ..., described with reference to FIG. 4). The bands can extend across a width of the blanket 400, along the length of the blanket 400, or along other directions. The bands can be straight or can have other shaped, e.g., irregular, edges. The thermal blanket 400 also includes velour regions 410. The band regions 404, 408, 406 each can be velour or can have patterns. In the example shown in the figure, all band regions have the same pattern, each being similar to the pattern of regions 384, 386, 388, 390 of FIG. 3A, with relatively high pile in oval parts 412 and grid parts 414 and relatively low pile or no pile in remaining regions 416. The pile in corresponding parts of different regions can have the same or different heights. In the example shown, the pile has the same height. However, the pile densities in the three regions 404, 406, 408 are different, with the region 406 having the lowest pile density, the region 408 having the second lowest pile density, and the region 404 having the highest pile density. As a result, the band region 406 has the highest air permeability, e.g., a CFM of 294; the band region 408 has relatively high air permeability, e.g., a CFM of 236; the band region 404 has less high air permeability, e.g., a CFM of 231. The velour regions 410 can have the lowest air permeability, e.g., a CFM of 149. In use, the thermal blanket 400 can cover a user's body along the x or -*x* direction. The blanket provides good thermal insulation in the end regions 410 that corresponding to the user's head, shoulder and lower legs, and provides good air permeability in the middle regions, particularly the band region 406.

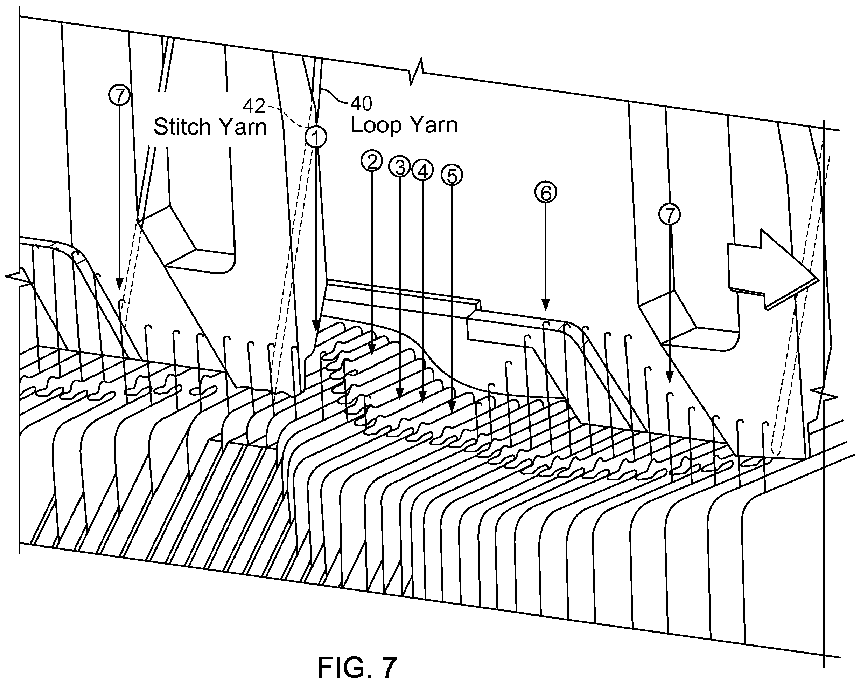

The unitary engineered thermal fabrics can be produced by any procedure suitable for creating regions with different pile heights and/or regions with no pile, in predetermined designs and arrangements. Examples of suitable procedures include, e.g., electronic needle and/or sinker selection, tubular circular or terry loop knit construction, e.g. by reverse plaiting (as described below with respect to FIGS. 7 to 14), to form double face fabric or to form pseudo single face fabric, where the jersey side can be protected by coating for abrasion or pilling resistance (as described below) or can be used as is for laminating, or by regular plaiting, to form single face fabric, warp knit construction, woven construction, and fully fashion knit construction. Any suitable yarn or fibers may be employed in forming the engineered thermal fabrics. Examples of suitable yarn or fibers include, e.g., synthetic yarn or fibers formed, e.g., of polyester, nylon or acrylic; natural yarn or fibers formed, e.g., of cotton or wool; regenerate yarn or fibers, such as rayon; and specialty yarn or fibers, such as aramid yarn or fibers, as sold by E.I. DuPont under the trademarks NOMEX® and KEVLAR®. Flame retardant fiber blends can also be used in the unitary engineered thermal fabrics. The flame retardant fiber blends can contain modacrylic yarns and/or fibers blended with cellulosic with or without other flame retardant fibers.

A pattern of contrasting pile height regions, including one or more regions with no loop pile yarn, is knitted, or otherwise formed, in a unitary fabric. If desired, multiple, different unitary engineered thermal fabrics can then be assembled to form an engineered thermal fabric article, e.g., a garment or the engineered thermal fabric blankets 300, 350 as shown in FIGS. 3 and 4. The patterns of the fabrics are engineered to cover substantial portions of the body surface, each fabric typically having multiple regions of contrasting pile height and/or contrasting air permeability performance, thereby to minimize or avoid the cut-and-sew process typical of prior art thermal fabric articles. The disclosure thus permits construction of engineered thermal fabric articles with very intricate patterns of contrasting thickness, which can be employed, e.g., as integral elements of a blanket design. This level of intricacy generally cannot be achieved by standard cut and sew processes, e.g., simply sewing together a variety of fabric patterns and designs.

During processing, the unitary engineered thermal fabrics may be dyed, and one or both surfaces finished to form regions of contrasting pile loop height, e.g., by raising one or both surfaces, or by raising one surface and cutting the loops on the opposite surface. The degree of raising will depend on the pile height of the loop pile yarn. For example, the knit can be finished by cutting the high loops, or shearing just the high pile, without raising the low loop pile height and/or the no loop pile height. Alternatively, the knit can be finished by raising the loop surface; the high loop will be raised higher on finishing to generate relatively higher bulk/greater thickness, and thus to have relatively increased insulative properties. Regions of contrasting bulk may also be obtained in a reverse circular knit terry construction by knitting two different yarns having significantly different shrinkage performance when exposed to dry or wet heat (e.g., steam or high temperature water) in a predetermined pattern. The very low shrinkage (e.g., 0 to 10% shrinkage) yarn may be spun yarn, flat filament yarn or set textured yarn, and the high shrinkage yarn (e.g., 20 to 60% shrinkage) may be heat sensitive synthetic yarn in flat yarn (like polypropylene) or high shrinkage polyester or nylon textured filament yarn. According to one implementation, the terry sinker loop yarn is cut on the knitting machine itself, where the velour height of the different yarns is identical, and the fabric is then exposed to high temperature (dry heat or wet heat), e.g. during dyeing, to generate differences in relative pile height between contrasting regions of the two types of yarn, based on the contrast in shrinkage characteristics. Contrasting pile height may also be achieved by knitting one yarn into loops to be cut to a desired height on the knitting machine or later in the finishing process in combination with a low pile knitted to a zero pile height (e.g., 0 mm sinker). The engineered thermal fabric articles may also include regions of no loop at all, to provide an additional contrasting level or height of pile (i.e., no pile).

The outer-facing surface (i.e., the technical back loop, or the technical face (jersey), where the latter is preferred for single face fabrics) of the engineered thermal fabrics may also be treated with a resin or chemical binder to form a relatively hard surface for resistance to pilling and/or abrasions, e.g. as described in U.S. Patent Application Publication No. 2005-0095940 and U.S. Patent No. 7,038,177.

The pattern of contrasting pile heights, which may be varied to accommodate any predetermined design, can also be optimized for a variety of different thermal insulation preferences or uses. For example, referring again to FIGS. 1 to 4, regions 20 of relatively higher pile can be situated to provide warmth in desired regions such as the chest and upper back, while regions 24 of the lower back can comprise regions of relatively lower pile and/or no pile. Referring particularly to FIG. 2, in some implementations of engineered thermal fabric articles, regions of patterns of thickness (e.g., stripes, plaids, dots and/or other geometric or abstract patterns, in any combination desired) can be used to create regions 22 of intermediate warmth and breatheablity. The knit fabric construction will typically have some degree of stretch and recovery in the width direction. Significantly higher stretch and recovery, and/or stretch in both directions (length and width), can be provided as desired, e.g., for an engineered thermal fabric garment or blanket having enhanced comfort as well as body fit or compression, by incorporating elastomeric yarn or spandex, PBT or 3GT, or other suitable material, with mechanical stretch in the stitch yarn position.

In some implementations, in addition to being engineered for controlled insulation, the unitary engineered thermal fabrics described above may be laminated to knit fabrics with velour of at least one pile height, e.g., low, high and/or any combination thereof, or to woven fabrics with or without stretch. Optionally, a membrane may be laminated between the layers of fabric to cause the laminate to be impermeable to wind and liquid water, but breatheable (e.g., a porous hydrophobic or non-porous hydrophilic membrane), as in fabric product manufactured by Malden Mills Industries, Inc. and its successor, Polartec, LLC, as described in U.S. Patent Nos. 5,204,156; 5,268,212 and 5,364,678. Alternatively, the laminate may be constructed to provide controlled air permeability (e.g., by providing an intermediate layer in the form of a perforated membrane, a crushed adhesive layer, a foam adhesive layer, or a discontinuous breatheable membrane), as in fabric product manufactured by Malden Mills Industries, Inc. and its successor, Polartec, LLC, as described in U.S. Patent Application Nos. 09/378,344, and U.S. Patent Application Publication Nos. 2002-0025747, 2003-0104735 and 2005-0020160.

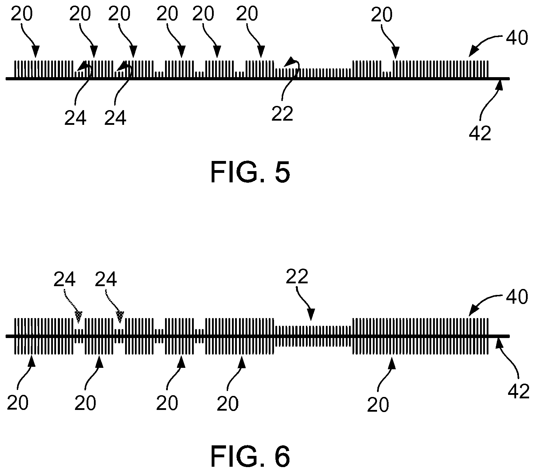

Referring again to FIGS. 1 and 2, and also to FIGS. 5 and 6, unitary engineered thermal fabrics define regions of contrasting pile height, e.g., including regions 20 of relatively higher pile, regions 22 of intermediate or relatively low pile, and regions 24 of no pile, depending on the presence and height of loop yarn 40 relative to, i.e. above, stitch yarn 42. The engineered fabric prebody is thus formed according to a predetermined design, providing regions of relatively higher pile 20, intermediate or relatively lower pile 22, or no pile 24. Referring to FIG. 2, in some implementations, regions 22 of intermediate insulation and breatheablity may be achieved by a combination or overlap of regions 20 of relatively high pile with regions 24 of no pile.

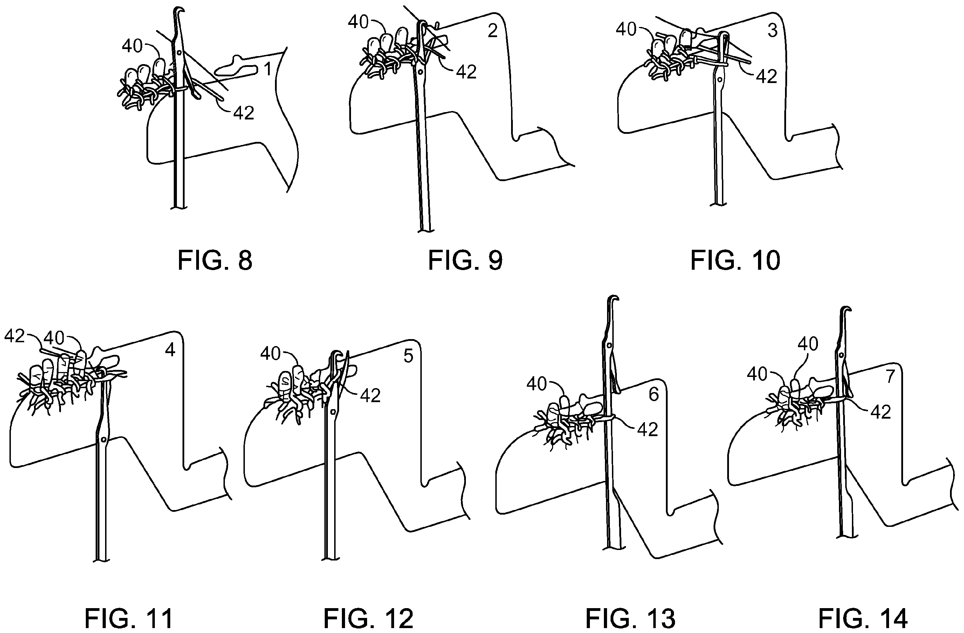

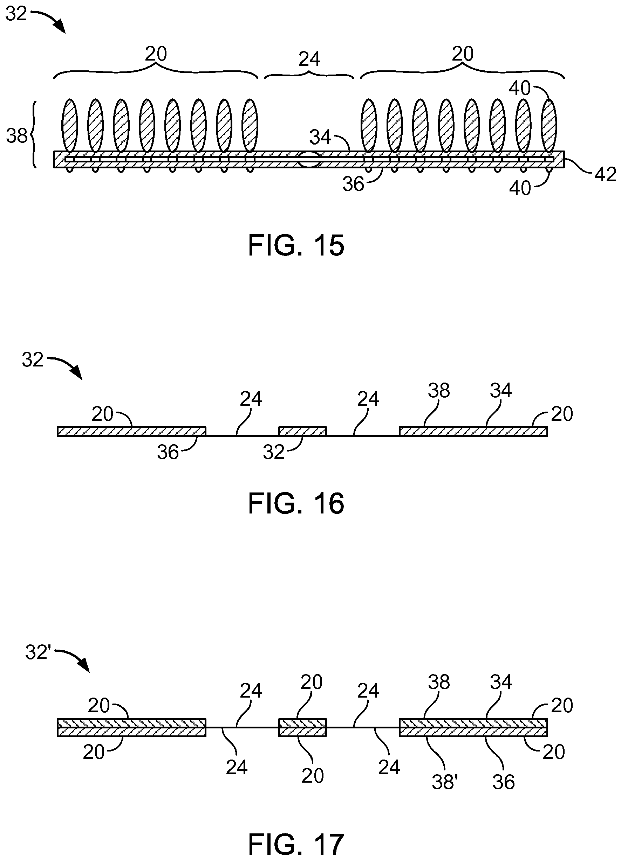

Referring to FIGS. 8 to 14, according to one implementation, a fabric body 12 is formed (in a continuous web) by joining a stitch yarn 42 and a loop yarn 40 in a standard reverse plaiting circular knitting (terry knitting) process, e.g., as described in Knitting Technology, by David J. Spencer (Woodhead Publishing Limited, 2nd edition, 1996). Referring to FIG. 15, in the terry knitting process, the stitch yarn 42 forms the technical face 36 of the resulting fabric body and the loop yarn 40 forms the opposite technical back 34, where it is formed into loops (40, FIG. 13) extending to overlie the stitch yarn 42. In the fabric body 32 formed by reverse plaiting circular knitting, the loop yarn 40 extends outwardly from the planes of both surfaces and, on the technical face 36, the loop yarn 40 covers or overlies the stitch yarn 42 (e.g., see FIG. 15).

As described above, the loop yarn 40 forming the technical back 34 of the knit fabric body 32 can be made of any suitable synthetic or natural material. The cross section and luster of the fibers or filaments can be varied, e.g., as dictated by requirements of intended end use. The loop yarn 40 can be a spun yarn made by any available spinning technique, or a filament flat or textured yarn made by extrusion. The loop yarn denier is typically between about 40 denier to about 300 denier. A preferred loop yarn is a 200/100 denier T-653 Type flat polyester filament with trilobal cross section, e.g., as available commercially from E.I. DuPont de Nemours and Company, Inc., of Wilmington, Delaware, or 2/100/96 texture yarn to increase tortuosity and reduce air flow, e.g., yarn from UNIFI, Inc., of Greensboro, NC.

The stitch yarn 42 forming the technical face 36 of the knit fabric body 32 can be also made of any suitable type of synthetic or natural material in a spun yarn or a filament yarn. The denier is typically between about 50 denier to about 150 denier. A preferred yarn is a 70/34 denier filament textured polyester, e.g., as available commercially from UNIFI, Inc., of Greensboro, NC. Another preferred yarn is cationic dyeable polyester, such as 70/34 T-81 from DuPont, which can be dyed to hues darker or otherwise different from the hue of the loop yarn, to further accentuate a pattern.

In the preferred method, the fabric body 32 is formed by reverse plaiting on a circular knitting machine. This is principally a terry knit, where loops formed by the loop yarn 40 cover or overlie the stitch yarn 42 on the technical face 36 (see FIG. 15).

Referring now to FIGS. 16 and 17, during the finishing process, the fabric body 32, 32' can go through processes of sanding, brushing, napping, etc., to generate a fleece 38. The fleece 38 can be formed on one face of the fabric body 32 (FIG. 16), e.g., on the technical back 34, in the loop yarn, or fleece 38, 38' can be formed on both faces of the fabric body 32' (FIG. 17), including on the technical face 36, in the overlaying loops of the loop yarn and/or in the stitch yarn, with regions of high bulk 20 and low/no bulk 24. The fabric body 32, 32' can also be treated, e.g., chemically, to render the material hydrophobic or hydrophilic.

Also, the unitary engineered thermal fabrics can have pile of any desired fiber density and any desired pile height, with the contrast of insulative capacity and performance achieved, e.g., by relatively different pile heights (e.g., using different sinker heights), relatively different pile densities (e.g., using full face velour and velour with pattern of low pile or no pile), and relatively different types of yarns (e.g., using flat yarns with low shrinkage and texture yarns with high shrinkage). The unitary engineered thermal fabrics having contrasting high pile, low pile, and/or no pile may be generated, e.g., by electronic sinker selection or by resist printing, as described below, and as described in U.S. Provisional Patent Application No. 60/674,535, filed April 25, 2005. For example, sinker loops of predetermined regions of the fabrics may be printed with binder material in an engineered body mapping pattern, e.g., to locally resist raising. The surface is then raised in non-coated regions. The result is a fabric having an engineered pattern of raised regions and non-raised regions. The printed regions may be formed of sub-regions of contrasting thermal insulation and breatheability performance characteristics by use of different binder materials, densities of application, penetration, etc., thereby to achieve optimum performance requirements for each sub-region of the engineered printing pattern.

Other aesthetic effects may also be applied to the face side and/or to the back side of the engineered thermal fabric, including, e.g., color differentiation and/or patterning on one or both surfaces, including three dimensional effects. Selected regions may be printed, and other regions may be left untreated to be raised while printed regions remain flat, resisting the napping process, for predetermined thermal insulation and/or breatheability performance effects. Also, application of binder material in a predetermined engineered pattern may be synchronized with the regular wet printing process, including in other regions of the fabric body. The wet printing may be applied to fabric articles made, e.g., with electronic sinker loop selection or cut loop (of the pile) of cut loop on the knitting machine and may utilize multiple colors for further aesthetic enhancement. The colors in the wet print may be integrated with the resist print to obtain a three-dimensional print on one or more regions of the fabric, or even over the entire fabric surface. The sizes, shapes and relationships of the respective regions represented in the drawing are by way of example only. Regions of any shape and size can be arranged in any desired pattern, tailored, e.g., for use by persons of different ages and different genders, etc. and for other factors, such as seasonality, etc.

In some implementations, a thermal blanket, such as the thermal blankets 300, 350 of FIGS. 3 and 4, includes an insulated composite fabric ("technical down") that incorporates a unitary engineered thermal fabric, such as the unitary engineered thermal fabric discussed above, between inner (to face a user's body) and outer (to face an external environment) fabric layers. In some implementations, the inner and outer fabric layers are identical in structure and the insulated composite fabric is reversible. The outer and inner fabric layers can also have different patterns or configurations (discussed below). The inner and outer fabric layers can provide advantages, e.g., protect the unitary engineered thermal fabric, provide aesthetic effects to the blanket, and others, without substantially changing the thermal insulation properties, e.g., heat dissipation rate, provided by the unitary engineered thermal fabric.

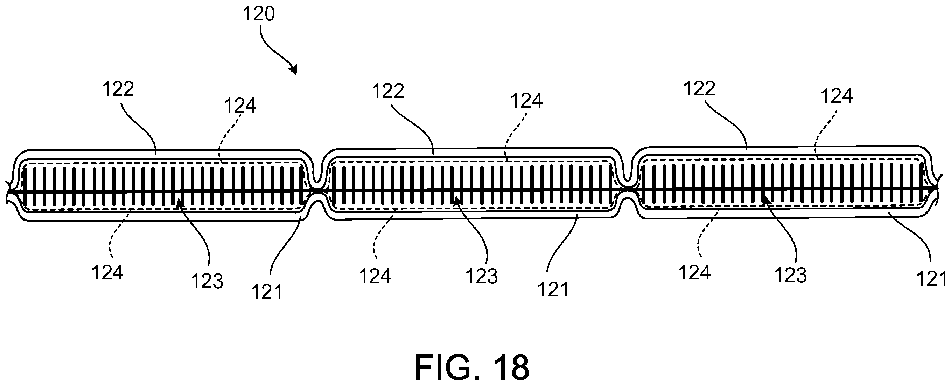

As an example, FIG. 18 illustrates an insulated composite fabric 120 that is suitable for forming an entire or a part of a thermal blanket. The insulated composite fabric 120 consists of an inner "shell-liner" fabric layer 121; an outer "shell" fabric layer 122; and an insulating-filler fabric layer 123 enclosed therebetween. The insulating-filler fabric layer 123 can be sewn (e.g., quilted as illustrated in FIG. 18) and/or connected with tack stitches) to one or both of the inner and outer fabric layers 121, 122, or, in some cases, a loose insulating-filler fabric layer 123 is anchored in the seams of the blanket along the periphery. Alternatively or additionally, the insulating-filler fabric layer 123 can be attached to one or both of the inner and outer fabric layers 121, 122 by other physical anchoring, e.g., via snapping, tucking, jumping and tucking, ultrasound bonding, lamination, etc.

The insulating-filler fabric layer 123 can have features similar to or the same as the unitary engineered thermal fabrics of FIGS. 1, 2, 5, and 6 and engineered for suitable use in blankets 300, 350 of FIGS. 3 and 4. Accordingly, the term "insulating-filler fabric layer" and the term "unitary engineered thermal fabric" are used interchangeably herein. For example, the insulating-filler fabric layer can be patterned (using high pile, low pile, and/or no pile) based on the thermal configuration and need of the thermal blankets, such the thermal blankets 300, 350 of FIGS. 3 and 4.

In some implementations, the outer fabric layer 122 of the thermal blanket has a jacquard pattern to enhance the synergy with the insulating-filler fabric layer 123, and to provide the thermal blanket with aesthetic appealing. The outer fabric layer 122 has a pattern, e.g., formed of regions having contrasting pile heights and/or pile densities, that corresponds to the pattern of the insulating-filler fabric layer to enhance the comfort level of the user. The inner fabric layer 121 can have a pattern, e.g., formed of regions having contrasting pile heights and/or pile densities, that corresponds to the pattern of the insulating-filler fabric layer to enhance the comfort level of the user. The patterned inner and outer fabric layers 121, 122 do not substantially restrict heat dissipation at the desired regions of the incorporated insulating-filler fabric layer, e.g., regions covering the hip. As a result, the thermal properties of a thermal blanket made from an insulated composite fabric are not substantially different from thermal blankets that are made only from the unitary engineered thermal fabric included in the insulated composite fabric. The thermal blanket made from the insulated composite fabrics can also provide thermal features as discussed for the blankets 300, 350, and can provide superior comfort to a user, e.g., by providing more insulation in predetermined region(s), and lower thermal insulation and better breathability in other region(s) than a conventional blanket provides. The outer and/or inner fabric layer can be a knit having a light weight, e.g., about 1.0 oz/ yard² to about 6.0 oz/ yard² (about 33.8 grams per square meter to about 203.1 grams per square meter).

In some implementations, the insulating-filler fabric layer 123 is a textile fabric with raised surface on one side or both sides. The textile fabric of the insulating-filler fabric layer 123 is constructed to include face yarn (pile) that is positioned generally perpendicular to stitching or backing yarn. This type of construction can provide high bulk with good resiliency to maintain the thermal insulation of the insulating-filler fabric layer 123 even under compression.

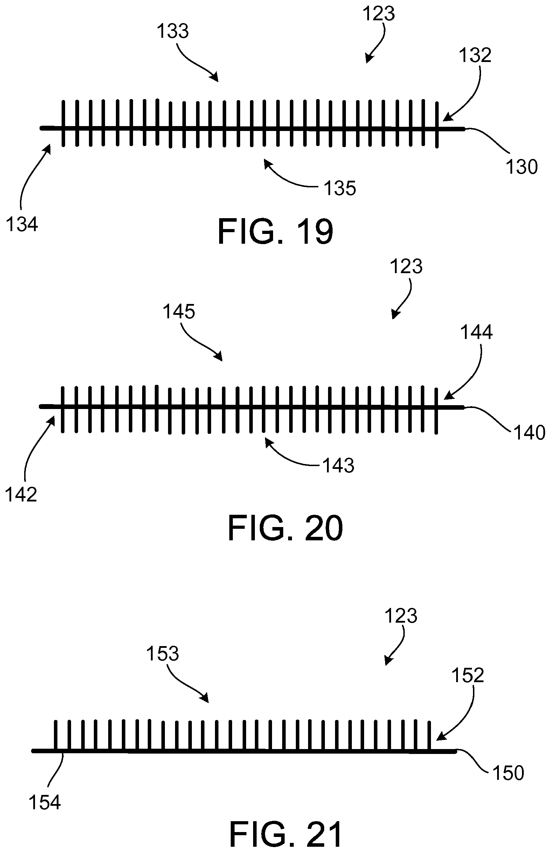

Referring to FIG. 19, the insulating-filler fabric layer 123 may be formed from a double face warp knit fabric 130 that includes a technical back 132 formed of pile yarns brushed to provide a plush velvet surface 133, and a technical face 134 formed of backing yarns and stitching yarns. Either the backing yarns or the stitching yarns of the technical face 134 may be napped to form a fleece/velour 135. Alternatively, in some cases, some of the pile yarns overlay the stitch yarn at the technical face 135 and may be brushed or napped to form a fleece/velour 135 surface at the technical face 135. Additional details regarding the construction of a suitable double face warp knit fabric may be found, e.g., in U.S. Patent No. 6,196,032, issued March 6, 2001; U.S. Patent No. 6,199,410, issued March 13, 2001; U.S. Patent No. 6,832,497, issued December 21, 2004; U.S. Patent No. 6,837,078, issued January 4, 2005; and U.S. Patent No. 5,855,125, issued January 5, 1999. Suitable double face warp knit fabrics are commercially available, e.g., from Polartec, LLC, of Lawrence MA, under the trademark BOUNDARY®.

Alternatively or additionally, the insulating-filler fabric layer 123 may be formed from a double face knit fabric having reverse plaited terry sinker loop knit construction. Referring to FIG. 20, the double face knit fabric with reverse plaited terry sinker loop knit construction 140 has a technical face 142 with a raised or napped surface 143, and a technical back 144 in which sinker loops are sheared to form a cut loop velvet surface 145. Additional details regarding the construction of a suitable double face knit fabric with reverse plaited terry sinker loop knit construction may be found in U.S. Patent No. 6,131,419, issued October 17, 2000.

Referring to FIG. 21, the insulating-filler fabric layer 123 may also be formed from a single face fabric 150 that is constructed to include a technical face 152 with face yarn that is positioned generally perpendicular to stitching or backing yarn 154.

Alternatively, or additionally, the insulating-filler fabric layer 123 may be formed from a fabric having a sliver knit construction. The sliver knit construction can be formed by circular knitting coupled with the drawing-in of sliver of fibers to produce a pile like fabric. The sliver knit construction allows for the use of relatively coarse fiber (e.g., 5 dpf to 15 dpf). This relatively coarse fiber can provide for good resiliency and resistance to compression, and can generate very high pile (e.g., pile height of 3 inches to 4 inches (about 7.6 cm to about 10.2 cms)). The sliver fabric of the insulating-filler fabric layer can be finished as a single face fabric with a raised surface at the technical back, or as a double face fabric with raised surfaces on both the technical back and the technical face. Generally, the sliver knit construction is prone to "shedding" and may exhibit undesirable aesthetic appearance (e.g., poor finish) when raised on the technical face. However, when incorporated as a filler layer, the aesthetic appearance of the raised technical face is less critical since the fabric is enclosed between the outer "shell" fabric layer 122 and the inner "shell-liner" fabric layer 121 (FIG. 18).

In some implementations, the insulating-filler fabric layer 123 may include elastomeric material for enhanced stretch and recovery. For example, the insulating-filler fabric layer 123 may include elastomeric yarns and/or fibers, e.g., incorporated in the backing or stitching yarns. In some examples, the insulating-filler fabric layer 123 has stretch without including elastomeric material.

The insulating-filler fabric layer 123 has a weight of about 1 ounce per square yard to about 12 ounces per square yard (about 33.9 grams per square meter to about 406 grams per square meter), has relatively high thickness (bulk) (e.g., a thickness of at least about 0.1 inch (about 2.54 mm), e.g., about 0.1 inch to about 1.0 inch (about 2.5 mm to about 2.54 cm), and has high insulation per weight unit (e.g., about 0.2 clo/oz² to about 1.6 clo/oz², where 1 clo = 0.155 m²K/W).

The insulating-filler fabric layer 123 may consist of a hydrophobic fabric, which, in case of water penetration through the outer fabric layer 122 (FIG. 18) will not be held or absorbed, and will be able to dry fast.

The inner and outer fabric layers 121, 122 (FIG. 18) can both be made of woven fabric. Alternatively, in some cases, the inner "shell-liner" fabric layer 121 and/or the outer "shell" fabric layer 122 may instead consist of a knit fabric, such as a knit fabric having a single jersey construction, a double knit construction, a warp knit construction, or a mesh construction. The respective fabrics of the inner and outer fabric layers 121, 122 may be formed of synthetic yarns and/or fibers, regenerated yarns and/or fibers, natural yarns and/or fiber, and combinations thereof.

In some cases, the inner fabric layer 121 and/or the outer fabric layer 122 can also include elastomeric material, such as elastomeric yarns and/or fibers incorporated in the construction of the respective fabrics, for enhanced stretch and recovery. The incorporation of elastomeric material in the inner and outer fabric layers 121, 122 can be particularly beneficial where the insulating-filler fabric layer 123 also has stretch, such that the inner fabric layer 121 and the outer fabric layer 122 can stretch and move with the insulating filler layer 123 for enhanced user comfort.

The moisture vapor transmission rate and the air permeability of the insulated composite fabric 120 can be controlled by the void or openness of the fabric or fabrics of the inner and/or outer fabric layers 121, 122. In some cases, for example, the control of the air permeability of the insulated composite fabric 120 can be achieved by controlling one or more parameters (e.g., yarn size, yarn count, and/or weave density (pick/fill)) of the fabric forming the inner "shell-liner" fabric layer 121 and/or the outer "shell" fabric layer 122. Alternatively, or additionally, the control of the air permeability of the insulated composite fabric 120 can be achieved by applying a coating or film lamination 124 (FIG. 18) to one or more surfaces of the inner fabric layer 121 and/or the outer fabric layer 122.

The respective fabrics of the inner and outer fabric layers 121, 122 can be selected to provide the insulated composite fabric 120 with air permeability within a range of about 1.0 ft³/ft²/min to about 300 ft³/ft²/min, according to ASTM D-737, under a pressure difference of ½ inch of water (125 Pa) across the insulated composite fabric 120 (about 29.3 m³/m²/h and 8,790 m³/m²/h at 200 Pa). Depending on the particular construction, the composite fabric 120 may be tailored toward different end uses. For example, the insulated composite fabric 120 can be constructed to provide cold weather insulation with relatively high air permeability. In this case, the respective fabrics of the inner and outer fabric layers 121, 122 can be selected to provide the insulated composite fabric 120 with an air permeability of about 100 ft³/ft²/min to about 300 ft³/ft²/min, according to ASTM D-737, under a pressure difference of ½ inch of water (125 Pa) across the insulated composite fabric 120 (about 2,930 m³/m²/h and 8,790 m³/m²/h at 200 Pa).

Alternatively, the insulated composite fabric 120 can be constructed to provide cold weather insulation with relatively low air permeability. In this case, the respective fabrics of the inner and outer fabric layers 121, 122 can be selected to provide the insulated composite fabric 120 with an air permeability of about 1 ft³/ft²/min to about 80 ft³/ft²/min, according to ASTM D-737, under a pressure difference of ½ inch of water (125 Pa) across the insulated composite fabric 120 (about 29.3 m³/m²/h and 2,344 m³/m²/h at 200 Pa).

In some cases, the inner fabric layer 121 can have relatively higher air permeability than the fabric of the outer fabric layer 122. Utilizing fabric with relatively higher air permeability for the inner fabric layer 121, which is disposed facing towards the user's body, can help to enhance vapor movement and vapor transmission away from the user's body to help prevent overheating. For example, the inner fabric layer 121 may have an air permeability of about 5 ft³/ft²/min to about 300 ft³/ft²/min, tested according to ASTM D-737, under a pressure difference of ½ inch of water (125 Pa) across the inner fabric layer 21 (about 146.5 m³/m²/h and 8,790 m³/m²/h at 200 Pa), and the outer fabric layer 122 may have an air permeability of about 1 ft³/ft²/min to about 100 ft³/ft²/min (e.g., about 1 ft³/ft²/min to about 30 ft³/ft²/min), tested according to ASTM D-737, under a pressure difference of ½ inch of water (125 Pa) across the outer fabric layer 122 (about 29.3 m³/m²/h and 2,930 m³/m²/h (e.g., about 29.3 m³/m²/h and 879 m³/m²/h) at 200 Pa).

In some implementations, the outer fabric layer 122 with controlled air permeability is rendered flame retardant by including inherent and/or treated flame resistant or flame retardant yarns and/or fibers and/or is woven with 100% polyester or nylon treated for flame retardant features.

### Examples

### Example 1

In a unitary engineered thermal fabric, the height of the higher sinker loop pile is about 2.0 mm to about 5.0 mm, e.g. the relatively higher loop pile height is typically about 3.5 mm and can be about 5 mm to about 6 mm after raising, and the relatively lower sinker loop pile is about 0.5 mm to about 1.5 mm. Regions with relatively higher loop pile generate significantly higher bulk than regions with relatively lower loop pile and, as a result, provide higher insulation levels. Regions with no loop pile do not generate any bulk, and subsequently can have very high breatheablity to enhance cooling, e.g., cooling by heat of evaporation.

A thermal blanket not forming part of the invention can be made from this unitary engineered thermal fabric alone, or a thermal blanket can be made with additional inner and outer fabric layers, such as the inner and outer fabric layers 121, 122 of FIG. 18, as long as this fall within the scope of the claims.

### Example 2

In another engineered thermal fabric article that includes a unitary engineered thermal fabric, one sinker loop pile yarn is employed with a variety of no loop pile in predetermined patterns and contrasting density to create a large region of no loop pile, e.g., in the neck and armpit areas, for minimum insulation; a region of mixed pile and no loop pile in the abdominal area, for medium insulation; and a region of 100% loop pile in the chest area, for maximum insulation.

A thermal blanket not forming part of the invention can be made from this unitary engineered thermal fabric alone, or a thermal blanket can be made with additional inner and outer fabric layers, such as the inner and outer fabric layers 121, 122 of FIG. 18 as long as this fall within the scope of the claims.

### Example 3

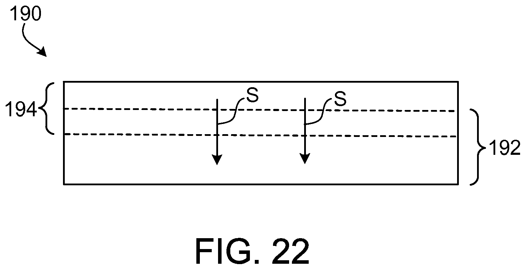

Referring next to FIG. 22, another implementation of a unitary engineered thermal fabric is formed with a plaited construction in which two layers are knit simultaneously, with the layers being separate but integrally intertwined. The plaited knit construction 190 is formed in a single jersey knit or a double knit, with a synthetic yarn having fine dpf being employed to form the outer side layer 192 of the unitary engineered thermal fabric and yarn with relatively coarser dpf being employed to form the inner side layer 194, thereby to promote better water management and user comfort, i.e., by moving liquid sweat (arrows, S) from the inner layer to the outer layer, from where it will evaporate to the ambient environment.

The engineered first layer 194 of the unitary engineered thermal fabric 190, i.e. the inner surface disposed to face the user's skin is further enhanced. For example, the layer may include synthetic fibers, like polyester, treated chemically to render the fibers hydrophilic. Also, spandex may be added to the plaited knit construction to achieve better stretch recovery properties, as well as to obtain two-way stretch, i.e., lengthwise and widthwise. For example, in one implementation, a triple plaited jersey construction is employed, with spandex yarn plaited between an inner layer of coarse fibers of synthetic material treated chemically to render the fibers hydrophilic and an outer layer of natural fibers, such as wool or cotton. The knit fabric may also be formed with double knit or double plaited jersey construction.

The second (outer) layer 192 of the unitary engineered thermal fabric may be provided with anti-microbial properties, e.g. for minimizing undesirable body odors caused by heavy sweating, e.g. due to high exertion, by applying anti-microbial chemicals to the surface 196 of the fabric 190 or by forming the second (outer) fabric layer 192 with yarn having silver ions embedded in the fibers during the fiber/yarn extrusion process or applied to the surface of the fibers (e.g., as described in U.S. Patent No. 6,194,332 and U.S. Patent No. 6,602,811). Yarn employed in forming the first (inner) fabric layer 194 may include fibers containing ceramic particles, e.g. ZrC (zirconium carbide) in order to enhance body heat reflection from the skin, and to provide better thermal insulation (e.g. as described in the U.S. Patent No. 7,217,456).

A thermal blanket not forming part of the invention can be made from this unitary layer engineered thermal fabric alone, or a thermal blanket can be made with additional inner and outer fabric layers, such as the inner and outer fabric layers 121, 122 of FIG. 18 as long as this fall within the scope of the claims.

### Example 4

Unitary engineered thermal fabrics for use in thermal blankets may be formed using a suitable knitting system for providing two and/or three contrasting pile heights in one integrated knit construction, which can be finished as single face or double face.

For example, in a first system, sinker loops of contrasting pile height may be generated at different, predetermined regions with high loop (about 3.5 mm loop height and 5 to 6 mm after being raised), low loop and no loop. In second system, the loop yarn may be cut on the knitting machine, forming regions of high pile height (up to about 20 mm) and no pile. In each system, using circular knitting, a single type of yarn may be employed, or yarns of different characteristics, e.g. contrasting shrinkage, luster, cross section, count, etc., may be employed in different regions.

In the case of loops yarn, e.g. as in the first system, the loops may be left as is (without raising), or the highest loops may be cut (leaving the lower loop and no loop "as is"), or both loops may be napped, in which case both loops will generate velour after shearing at the same pile height, and only after tumbling will pile differentiation be apparent, with generation of shearling in the higher loop and small pebble in the lower loop.

In the case of contrasting yarns, as in the second system, differentiation in pile height between different regions will be based on the individual yarn characteristics, which will become apparent after exposure to thermal conditions.

Maximum knitting capability for creation of the discrete regions of contrasting characteristics may be provided by use of electronic sinker loop selection, which will generate different loop heights in the knit construction, and electronic needle selection, which will generate different knit constructions of the stitch yarn, such as 100% knit, knit-tuck, knit-welt, and knit-tuck-welt, with different aesthetics and contrasting air permeability performance in predetermined regions, with our without sinker loops.

### Example 5

A unitary engineered thermal fabric is formed as described above with a pattern of one or more regions having a first pile height and one or more regions having no pile. The one or more regions of first pile height are formed with two different yarns of significantly different shrinkage performance. For example, the yarn having relatively high shrinkage is made of very fine micro fibers, e.g. 2/70/200 tx, and the yarn having relatively less or no shrinkage is made of relatively more coarse and longer fibers, e.g. 212/94 polyester yarn with ribbon shape. When exposed to heat, the fabric forms a textured surface without pattern, resembling animal hair, with long, coarse fibers (like guard hairs) extending upwards from among the short, fine fibers at the surface. This is almost a "pick and pick" construction, or can be termed "stitch and stitch" for knit construction.

A thermal blanket not forming part of the invention can be made from this unitary layer engineered thermal fabric alone, or a thermal blanket can be made with additional inner and outer fabric layers, such as the inner and outer fabric layers 121, 122 of FIG. 18 as long as this fall within the scope of the claims.

### Example 6

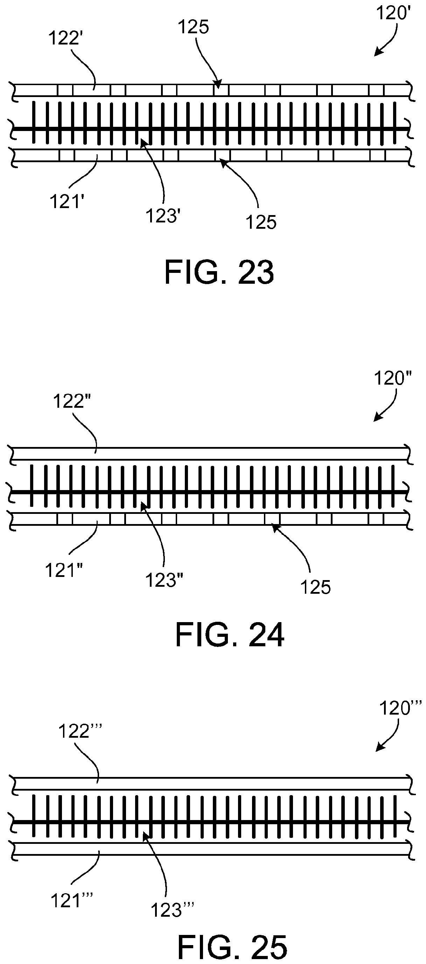

FIG. 23 illustrates one example of an insulated composite fabric 120' with a light-duty construction and suitable for use in a thermal blanket. The fabric includes an inner fabric layer 121', an outer fabric layer 122', and an insulating-filler fabric layer 123' enclosed therebetween. Both the inner fabric layer 121' and the outer fabric layer 122' consist of a knit fabric with mesh construction. The mesh construction of the inner and outer fabric layers 121', 122' has a plurality of openings 125. The insulating-filler fabric layer 123' consists of a double face knit fabric (e.g., double face warp knit, double face knit with raised sinker terry loop construction, or double face sliver knit) having a weight of about 1 ounce per square yard to about 4 ounces per square yard (about 33.9 grams per square meter to about 135.4 grams per square meter), and a bulk (thickness) of about 0.1 inch to about 0.2 inch (about 2.5 mm to about 2.54 cm). The insulating-filler fabric layer 123' is sewn (e.g., quilted) to one or both of the inner and outer fabric layers 121', 122'. The light-duty insulated composite fabric 120' provides insulation of about 0.8 clo/oz² to about 1.6 clo/oz², where 1 clo = 0.155 m²K/W.

### Example 7

FIG. 24 illustrates an insulated composite fabric 120" with a medium-duty construction and suitable for use in a thermal blanket. The medium-duty insulated composite fabric 120" includes an inner fabric layer 121" consisting of a knit fabric with mesh construction, an outer fabric layer 122" consisting of a woven fabric, and an insulating-filler fabric layer 123" enclosed therebetween. The insulating-filler fabric layer 123" consists of a double face knit fabric (e.g., double face warp knit, double face knit with raised sinker terry loop construction, or double face sliver knit) having a weight of about 3 ounces per square yard to about 8 ounces per square yard (about 101.6 grams per square meter to about 270.8 grams per square meter), and a bulk (thickness) of about 0.15 inch to about 0.4 inch (about 3.8 mm to about 10.2 mm). The insulating-filler fabric layer 123" is sewn (e.g., quilted) to one or both of the inner and outer fabric layers 121", 122". The medium-duty insulated composite fabric 120" provides insulation of about 1.0 clo/oz² to about 1.8 clo/oz², where 1 clo = 0.155 m²K/W.

### Example 8

FIG. 25, illustrates an insulated composite fabric 120''' with a heavy-duty construction and suitable for use in a thermal blanket. The heavy weight insulated composite fabric 120''' includes an inner fabric layer 121''', an outer fabric layer 122''', and an insulating-filler fabric layer 123''' enclosed therebetween. In this heavy-duty construction, both the inner fabric layer 121''' and the outer fabric layer 122''' consist of a woven fabric. The insulating-filler fabric layer 123''' consists of a double face knit fabric (e.g., double face warp knit, double face knit with raised sinker terry loop construction, or double face sliver knit) having a weight of about 4 ounces per square yard to about 12 ounces per square yard (about 135.4 grams per square meter to about 406.2 grams per square meter), and a bulk (thickness) of about 0.2 inch to about 1.0 inch (about 5.1 mm to about 25.4 mm). The insulating-filler fabric layer 123''' is sewn (e.g., quilted) to one or both of the inner and outer fabric layers 121''', 122'''. The heavy-duty insulated composite fabric 120''' provides insulation of about 1.0 clo/oz² to about 3.0 clo/oz², where 1 clo = 0.155 m²K/W.

### Example 9

Two thermal blankets (A, B) were made and their thermal properties were measured using infra-red photography. First thermal blanket (A) was made of a stand-alone unitary engineered thermal fabric having double raised surfaces. Second thermal blanket (B) included the same unitary engineered thermal fabric as used in the first thermal blanket (A). However, the unitary engineered thermal fabric in the second thermal blanket (B) was covered by an outer fabric layer and an inner fabric layer, each formed of a light weight knit (e.g., about 3 oz/yard², or about 101.6 gms/m²). The first and second thermal blankets (A, B) were each placed over a thermal object held at a constant temperature of 104 °C.

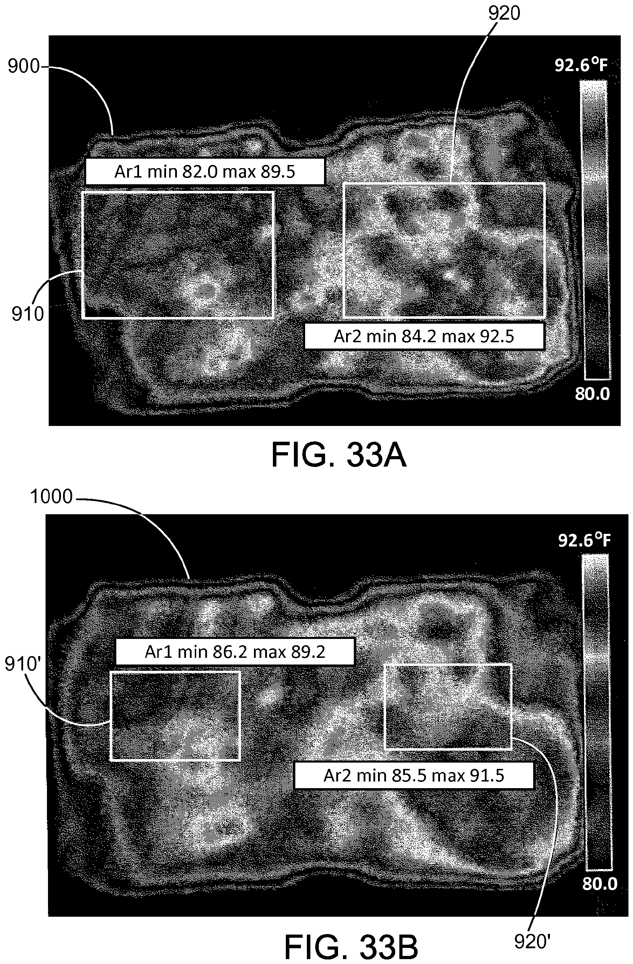

Referring to FIGS. 33A and 33B, after about 15 minutes, infra-red photos 900, 1000 of the first and second thermal blankets (A, B) over the thermal objects were taken. As shown in the photo 900, the unitary engineered thermal fabric provided relatively high thermal insulation within a region 910 and relatively low thermal insulation within another region 920. In other words, heat from the thermal object below the first thermal blanket (A) dissipated faster in the region 920 than in the region 910. The photo 1000 showed that the addition of the inner and outer fabric layers, each patterned similarly to the unitary engineered thermal fabric, did not substantially alter the thermal properties shown in photo 900. In particular, a region 910' corresponding to the region 910 of the first thermal blanket (A) had relatively high thermal insulation and a region 920' corresponding to the region 920 had relatively low thermal insulation. In addition, the inner and outer fabric layers in the second thermal blanket (B) did not substantially restrict desired heat dissipation of the unitary engineered thermal fabric. As shown in photos 900 and 1000, the corresponding regions 910, 910' of the two thermal blankets (A, B) had similar temperatures (89.5°F and 89.2°F) and the corresponding regions 920, 920' also had similar temperatures (92.5°F and 91.5°F). In other words, the heat dissipation rate in corresponding regions of the first and second thermal blankets (A, B) were substantially the same.

### Other Examples

While certain examples have been described above, other examples are possible.

For example, an entire thermal blanket may be constructed from the unitary engineered thermal fabric or the insulated composite fabric, or, in some cases, a thermal blanket may be formed to include multiple unitary engineered thermal fabrics or multiple insulated composite fabrics, e.g., in different regions. In some implementations, a thermal blanket may include the unitary engineered thermal fabric(s) or insulated composite fabric(s) only in sections, e.g., the different regions of the blankets 300, 350 of FIGS. 3 and 4.

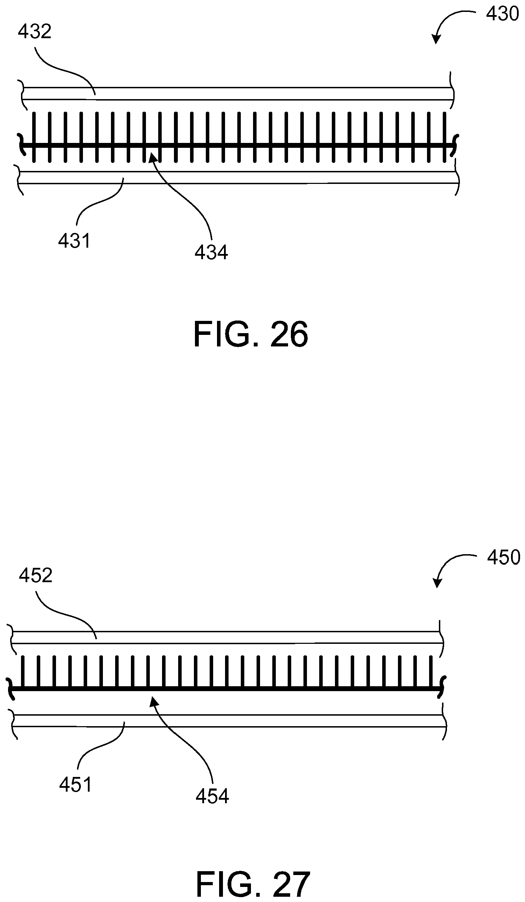

Referring to FIGS. 26 and 27, a first insulated composite fabric 430 and a second insulated composite fabric 450 can be joined together or with other fabrics by stitching at seams to form a thermal blanket. The first insulated composite fabric 430 includes a first inner fabric layer 431 that forms an inner surface of the thermal blanket to face towards the user's body, a first outer fabric layer 432 that forms an outer surface of the thermal blanket to face towards an external environment, and a first insulating-filler fabric layer 434 consisting of a textile fabric with a raised surface on at least one side of the fabric (a double face fabric is shown in FIG. 26). The first insulating-filler fabric layer 434 is enclosed between the first inner fabric layer 431 and the first outer fabric layer 432. The first insulated composite fabric 430 has an air permeability of about 1.0 ft³/ft²/min to about 80.0 ft³/ft²/min (e.g., about 4.0 ft³/ft²/min to about 20.0 ft³/ft²/min) tested according to ASTM D-737, under a pressure difference of ½ inch of water (125 Pa) across the first insulated composite fabric 430 (about 29.3 m³/m²/h and 2,344 m³/m²/h (e.g., about 117.2 m³/m²/h and 586 m³/m²/h) at 200 Pa).

The second insulated composite fabric 450 can be used to cover a different portion of a user's body than the first fabric portion 430, and, like the first insulated composite fabric 430, may also have a construction as described above with regard to FIG. 18. With reference to FIG. 27, the second insulated composite fabric 450 includes a second inner fabric layer 451, which forms an inner surface; a second outer fabric layer 452, which forms an outer surface; and a second insulating-filler fabric layer 454 consisting of a textile fabric with a raised surface on at least one side of the fabric. A single face fabric is shown in FIG. 27, however, the second insulating-filler fabric layer 454 may, alternatively, or additionally, include a double face fabric, e.g., a double face fabric with relatively lower thickness than the fabric of the first insulating-filler fabric layer 434. The second insulating-filler fabric layer 454 is enclosed between the second inner fabric layer 451 and the second outer fabric layer 452. The second insulated composite fabric 450 is constructed to have an air permeability that is different from, and relatively greater than, the air permeability of the first insulated composite fabric 430. The second insulated composite fabric 450 has an air permeability of about 5 ft³/ft²/min to about 300 ft³/ft²/min, tested according to ASTM D-737, under a pressure difference of ½ inch of water (125 Pa) across the second insulated composite fabric 450 (about 146.5 m³/m²/h and 8,790 m³/m²/h at 200 Pa).

Alternatively, or additionally, the first and second insulated composite fabrics 430, 450 can have contrasting stretch. For example, the first insulated composite fabric 430 may have relatively greater stretch (e.g., in the outer shell, the inner shell layer, and/or the insulting-filler) than the second insulated composite fabric 450.

In some cases, unitary engineered thermal fabrics can be used to form a thermal blanket. Each unitary engineered thermal fabric can consist of a plain textile fabric, e.g., a circular knit like single jersey (plaited or non-plaited), double knit, rib, warp knit, or woven with and/or without stretch. Or, as another alternative, the unitary thermal fabric may consist of a double face knit fabric having reverse plaited, terry sinker loop, and/or knit construction. Suitable fabrics for forming the unitary thermal fabrics are commercially, available, e.g., from Polartec, LLC, of Lawrence MA, under the trademarks POWER STRETCH™ and BOUNDARY™.

In some cases, the unitary engineered thermal fabric for use in a thermal blanket may be incorporated into a laminate composite fabric with outer and inner fabric layers, and a barrier resistant to wind and liquid water, while providing water vapor transport through absorption-diffusion-desorption, including a hydrophilic barrier and/or adhesive layer adhered to the inner and/or outer fabric layer. Suitable laminate composite fabrics are commercially available, e.g., from Polartec, LLC, of Lawrence MA, under the trademarks WINDBLOC® and POWER SHIELD®.

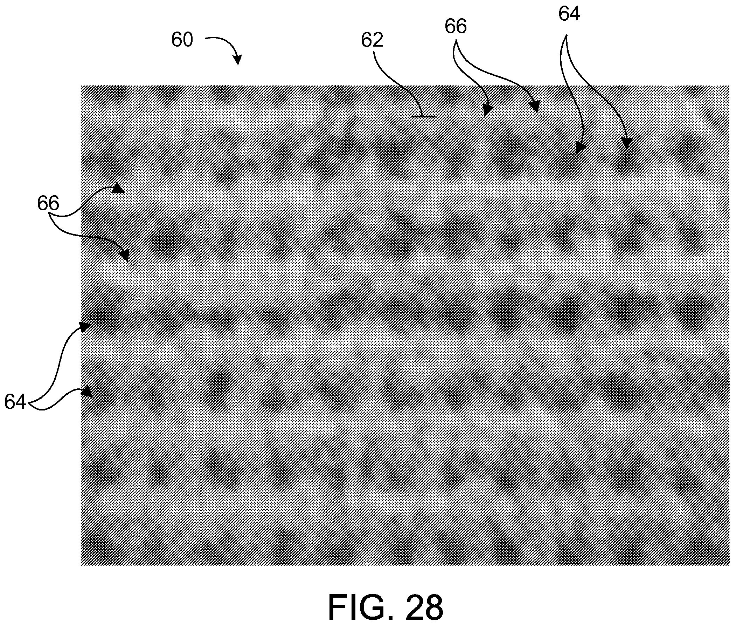

In some cases, enhancing the packability and/or compression (i.e., reducing the total volume of the insulated composite fabric) can be achieved by having voids or pile out regions (i.e., regions of no pile) in a predetermined pattern in the insulating-filler fabric layer. For example, FIG. 28 shows a raised surface knit fabric 460 having a first pile surface 462 that includes regions 464 of no pile interspersed among regions 466 of pile (e.g., pile having a height of at least about 2.0 mm). About 5% to about 70% of the surface area of the insulating-filler fabric can be covered by no pile regions.

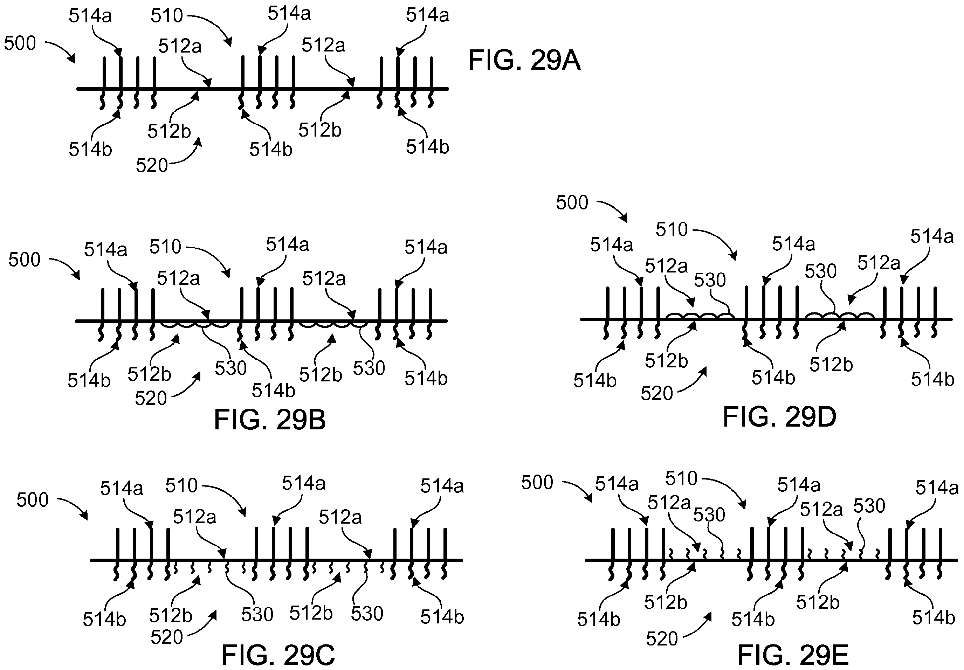

As mentioned above, the raised surface knit fabric of the insulating filler layer may have a construction made on a warp knitting, double needle bar raschel machine, where the pile yarns are grouped in a predetermined pattern, and some predetermined sections have voids (no pile yarn). For example, FIG. 29A illustrates an example of such a raised surface knit fabric 500 having a first pile surface 510 on the technical back that includes void regions 512a (e.g., regions of no pile) interspersed between regions of pile 514a. The fabric 500 also includes a second pile surface 520 (after being raised) on the technical face. As shown in FIG. 13A, the second pile surface 520 also includes void regions 512b (e.g., regions of no pile) interspersed between regions of pile 514b. When incorporated into an insulated composite fabric, such as described above, the pile yarn on the technical back and on the technical face (after raising) will keep the outer "shell" and the inner "shell-liner" fabric layers spaced apart, entrapping stagnant air, maximizing thermal insulation of the insulated composite fabric. The air entrapped between the shell and the shell-liner in the regions of no pile, will provide good thermal performance in static condition at very low air movement or wind.

In dynamic conditions (air flow or wind blowing onto the shell material having controlled air permeability), the thermal insulation in the void region may be reduced. However, the loss of thermal insulation can be reduced by providing relative lower fleece/velour (e.g. lower than the interconnecting pile) in the void regions 512a, 512b. This can be done by adding additional pile yarn 530 (preferably in fine dpf like micro fiber under 5.0 denier, e.g., under 1.0 denier or between 0.3 denier and 5.0 denier) without generating interconnecting pile, but which is held by the stitch and backing yarn along the technical face (FIG. 29) and/or along the technical back (FIG. 29D), and generating fleece/velour on the technical face upon raising the additional pile yarn 530 by napping (FIG. 29C) and/or generating fleece on the technical back upon raising the additional pile yarn 530 by napping (FIG. 29E). This lower fleece/velour (e.g. much lower than that formed by the interconnecting pile) in the void region, with improved tortuosity and reduced air movement (keeping entrapped air stagnate), serves to reduce thermal heat loss by convection.

While examples of insulating-filler fabrics have been described that include one or more raised surfaces, in some implementations, e.g., where relatively less insulation is needed, the insulating-filler fabric may instead have a regular knit construction (single or double face), which is finished on one side or both sides by brushing.

In some cases, the outer "shell" fabric layer, the inner "shell-liner" fabric layer, and/or the insulating-filler fabric layer may be formed of, and/or incorporate, flame-retardant materials (e.g., flame retardant fibers), or may be treated (e.g., chemically treated) to provide flame-retardance. In some implementations, the outer "shell" fabric layer is treated with durable water repellent (DWR), an abrasion resistant coating, camouflage, and/or infrared radiation reduction.

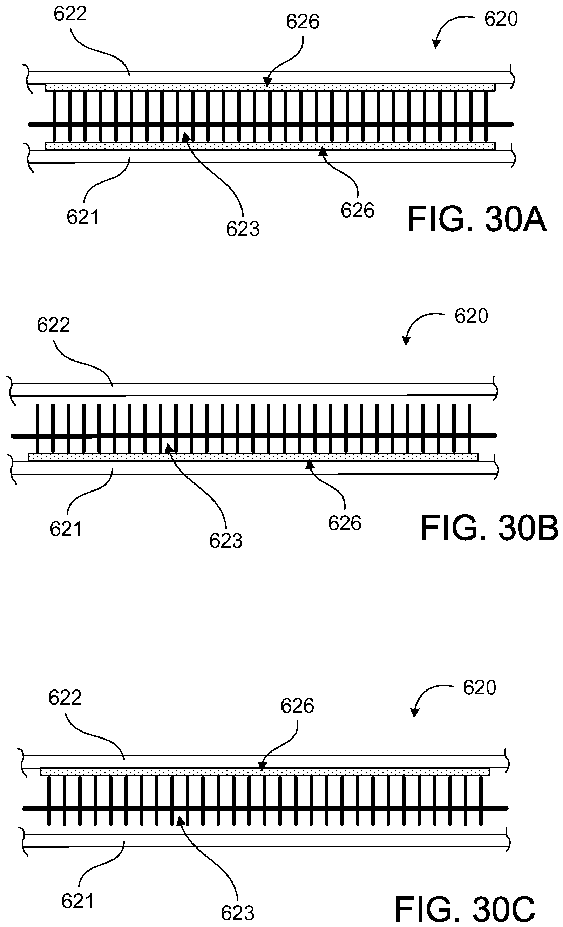

Although examples of insulated composite fabrics have been described in which an insulating-filler fabric layer is attached to one or both of an inner fabric layer and an outer fabric layer by sewing, in some cases, the insulating-filler fabric layer may be laminated to one or both of the inner fabric layer and the outer fabric layer. FIG. 30A illustrates an insulated composite fabric laminate 620. The insulated composite fabric laminate 620 includes an inner fabric layer 621, an outer fabric layer 622, and an insulating-filler fabric layer 623 enclosed therebetween. The insulating-filler fabric layer 623 consists of a double face knit fabric that is bonded to the inner fabric layer 621 and the outer fabric layer 622 with an adhesive 626. The adhesive can applied in a manner to substantially avoid further limiting the air permeability of the insulated composite fabric laminate 620. The adhesive can be applied, for example, in a dot coating pattern.

FIG. 30B illustrates an alternative example in which the insulating-filler fabric layer 623 is laminated only to the inner fabric layer 621, and FIG. 30C illustrates another alternative example in which the insulating filler fabric layer 623 is laminated only to the outer fabric layer 622.

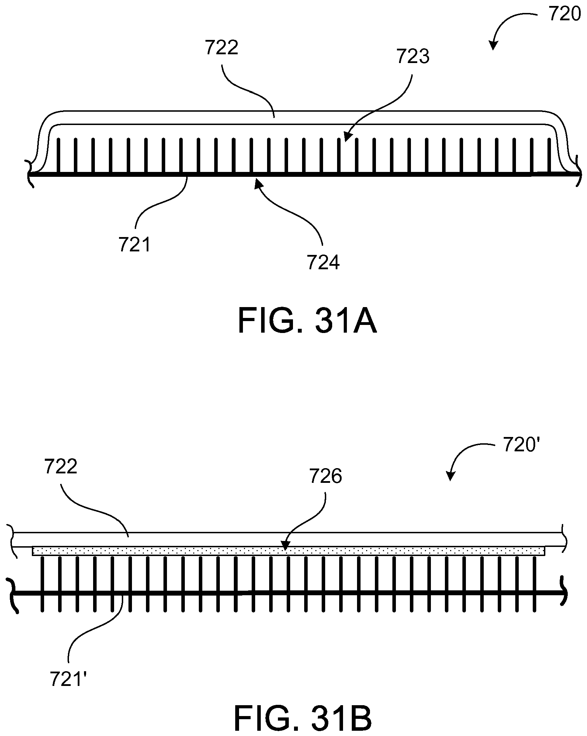

FIG. 31A illustrates yet another example of an insulated composite fabric 720 suitable for use in thermal blankets. The insulated composite fabric 720 of FIG. 31A includes an outer "shell" fabric layer 722 and an inner, insulating fabric layer 721. The outer fabric layer 722 consists of a woven fabric. The insulating fabric layer 721 consists of a single face knit fabric (e.g., single face warp knit, single face knit with raised sinker terry loop construction, or single face sliver knit) having a raised surface 723 (pile or velour) and an opposite, smooth surface 724. The insulating fabric layer 721 is attached to the outer fabric layer 722 (e.g., by sewing (e.g., quilting in any pattern, sewing, tucking, ultrasound bonding, or tack stitching), lamination, anchoring by stitching along seams, or other physical anchoring like snapping, etc.) such that the raised surface 723 faces toward the outer fabric layer 722. The smooth surface 724 of the insulating fabric layer 721 forms an exposed surface of the insulated composite fabric 720. When incorporated in a thermal blanket, the smooth surface 724 of the insulating fabric layer 721 can be arranged to form an inner surface of the blanket to face towards the user's body.

Either or both of the insulating fabric layer 721 and the outer fabric layer 722 can have stretch in at least one direction. In some cases, for example, either or both of the insulating fabric layer 721 and the outer fabric layer 722 can include elastomeric material (e.g., spandex yarns and/or fibers) for enhanced stretch and shape recovery.

Referring still to FIG. 31A, the moisture vapor transmission rate and the air permeability of the insulated composite fabric 720 can be controlled by the void or openness of the fabric of the outer fabric layer 722. In some cases, for example, the control of the air permeability of the insulated composite fabric 720 can be achieved by controlling one or more parameters (e.g., yarn size, yarn count, and/or weave density (pick/fill)) of the fabric forming the outer fabric layer 722. Alternatively, or additionally, control of the air permeability of the insulated composite fabric 720 can be achieved by applying a coating or by film lamination to one or both surfaces of the outer fabric layer 722.

FIG. 31B illustrates yet another example of an insulated composite fabric 720' suitable for use in a thermal blanket. The insulated composite fabric 720' of FIG. 31B includes an outer "shell" fabric layer 722 and an inner, insulating fabric layer 721'. As illustrated in FIG. 31B, the insulating fabric layer 721' consists of a double face knit fabric that is bonded to the outer fabric layer 722 with an adhesive 726 to form a fabric laminate. Alternatively, or additionally, the insulating fabric layer 721' may be connected to the outer fabric layer by quilting (in any pattern), tucking, ultrasound bonding, etc.

Either or both of the insulating fabric layer 721' and the outer fabric layer 722 can have stretch in at least one direction. The moisture vapor transmission rate and the air permeability of the insulated composite fabric 720' can be controlled, e.g. as discussed above with regard to FIG. 31A.

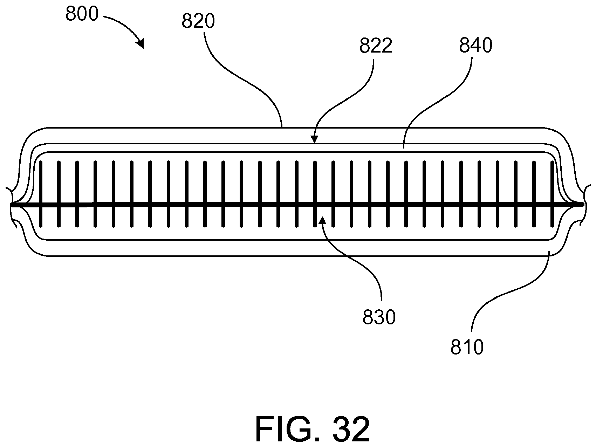

In some cases, the insulated composite fabric for use in a thermal blanket may be provided with water resistant properties. For example, the outer "shell" fabric layer may have a very tight construction (e.g., a tight woven construction) and may be treated with durable water repellent (DWR). Alternatively, or additionally, the insulated composite fabric may be provided with a waterproof membrane (e.g., a breathable waterproof membrane). For example, FIG. 32 illustrates an example of an insulated composite fabric 800 that consists of an inner "shell-liner" fabric layer 810, and an outer "shell" fabric layer 820, and an insulating-filler fabric layer 830 enclosed therebetween. In this example, a waterproof membrane 840 is laminated to an inner surface 822 of the outer "shell" fabric layer 820. The water barrier can be made of porous hydrophobic membrane, hydrophilic non-porous membrane, or electrospun material. Preferably, the insulating-filler fabric layer 830 is hydrophobic (e.g., formed of hydrophobic yarns/fibers), which, in case of water penetration through the outer fabric layer 820, the water will not be held or absorbed, and the fabric will be able to dry relatively quickly.

In some examples, a reversible blanket including an insulated composite fabric may also be provided. For example, the insulated composite fabric can be similar to that described above with reference to FIG. 18, consisting of a first fabric layer, a second fabric layer, and an insulating-filler fabric layer enclosed therebetween. The insulated composite fabric may be reversible, such that both the first fabric layer and the second fabric layer can optionally serve as either an outer "shell" fabric layer or an inner "shell-liner" fabric layer, which will allow the user to have a reversible insulated composite fabric ("technical down"). The first and second fabric layers may be made of fabrics of contrasting color and/or fabrics with contrasting patterns (e.g., camouflage) and/or fabrics with contrasting textures.

In some cases, the insulating-filler fabric layer, or the unitary engineered thermal fabric, may consist of a terry sinker loop (in reverse plaiting or regular plaiting) in which the terry loop is left un-raised. A relatively higher sinker (e.g., 2 to 9 mm) can be used to form the terry sinker loop. In this construction, the terry sinker loop may be provided in a predetermined pattern or design, while having other section(s) without the terry sinker loop (i.e. having voids), to reduce the total weight, as well as increasing the pliability and increasing the "packability" (e.g., by permitting easier folding). As mentioned above, the terry sinker loop can be made in regular plaiting construction, or in reverse plaiting construction. In the case of reverse plaiting constructions, the technical face (jersey side) may be finished, and the technical back may be left in a terry sinker loop (un-napped), or the terry sinker loop may be left on the technical back, without napping the technical face-jersey side (similar to regular plaited construction).

In some implementations, the insulating-filler fabric layer or the unitary engineered thermal fabric may be formed with plaited construction, e.g. plaited jersey or double knit construction, e.g. as described in U.S. Patent No. 6,194,322 and U.S. Patent No. 5,312,667, with a denier gradient, i.e. relatively finer dpf on the outer surface of the fabric and relatively more coarse dpf on the inner surface of the fabric, for better management of water (e.g. liquid sweat). In preferred implementations, one or more regions will be formed with full mesh, i.e. see-through holes, for maximum ventilation, and contrasting regions of full face plaited yarn for movement of moisture, with intermediate regions in other areas of the thermal blanket having relatively lesser concentrations of mesh openings, the regions being positioned to correlate with the ventilation requirements of the user's underlying body.

Although different examples are described throughout the disclosure, it is noted that the invention is defined by the following claims.

## Claims

1. A thermal blanket (300,350,380,400) comprising:
an inner fabric layer (121,431,451,621);
an outer fabric layer (122,432,452,622); and
a unitary fabric element between the inner fabric layer (121,431,451,621) and the outer fabric layer (122,432,452,622),
the unitary fabric element having a multiplicity of predetermined discrete regions of contrasting insulative capacities, the discrete regions being arranged based on insulative needs of corresponding regions of a user's body,
**characterised in that**
at least two of the predetermined, discrete regions of contrasting insulative capacities comprise
in one or more first discrete regions of the unitary fabric element, loop yarn having a first pile height and/or a first pile density, the one or more first discrete regions corresponding to one or more regions of the user's body having first insulative needs, and,
in one or more other discrete regions of the unitary fabric element, loop yarn having a second pile height and/or a second pile density,
the second pile height being different from and relatively greater than the first pile height and/or the second pile density being different from and relatively greater than the first pile density, the one or more other discrete regions corresponding to one or more regions of the user's body having other insulative needs different from and relatively greater than the first insulative needs; and
**in that** the outer layer (122,432,452,622) comprises a multiplicity of predetermined discrete regions of contrasting insulative capacities corresponding to the multiplicity of predetermined discrete regions of contrasting insulative capacities of the unitary fabric element.

2. The thermal blanket of claim 1, wherein the outer fabric layer (122,432,452,622) comprises a jacquard pattern to be exposed as an exterior surface of the thermal blanket.

3. The thermal blanket of claim 1, wherein the inner fabric layer (121,431,451,621) and/or the outer fabric layer (122,432,452,622) comprise a light weight woven or knit having a density of about 2 oz/yard² to about 6 oz/yard² (about 67.7 grams per square meter to about 203.1 grams per square meter).

4. The thermal blanket of claim 1, wherein the inner fabric layer (121,431,451,621) and/or the outer fabric layer (122,432,452,622) comprise a knit having a density of about 1.0 oz/yard² to about 10.0 oz/yard² (about 33.8 grams per square meter to about 338 grams per square meter).

5. The thermal blanket of claim 1, wherein the unitary fabric element is connected to the outer fabric layer (122,432,452,622) and the inner fabric layer (121,431,451,621) by stitching, quilting, or inserting the unitary fabric layer between the outer and inner fabric layers.

6. The thermal blanket of claim 1, wherein the inner layer (121,431,451,621) comprises a multiplicity of predetermined discrete regions of contrasting insulative capacities corresponding to the multiplicity of predetermined discrete regions of contrasting insulative capacities of the unitary fabric element.

7. The thermal blanket of claim 6, wherein the multiplicity of predetermined discrete regions of the inner fabric (121,431,451,621) comprise:
in one or more in one or more first discrete regions of the inner fabric corresponding to the one or more first discrete regions of the unitary fabric element, loop yarn having a third pile height and/or a third pile density, and,
in one or more other discrete regions of the inner fabric corresponding to the one or more other discrete regions of the unitary fabric element, loop yarn having a fourth pile height and/or a fourth pile density, the fourth pile height being different from and relatively greater than the third pile height and/or the fourth pile density being different from and relatively greater than the third pile density.

8. The thermal blanket of claim 1, wherein the multiplicity of predetermined discrete regions of the outer fabric comprise:
in one or more in one or more first discrete regions of the outer fabric (122,432,452,622) corresponding to the one or more first discrete regions of the unitary fabric element, loop yarn having a third pile height and/or a third pile density, and,
in one or more other discrete regions of the outer fabric corresponding to the one or more other discrete regions of the unitary fabric element, loop yarn having a fourth pile height and/or a fourth pile density, the fourth pile height being different from and relatively greater than the third pile height, and/or the fourth pile density being different from and relatively greater than the third pile density.

9. The thermal blanket of claim 1, wherein the loop yarn in different regions of the one or more second discrete regions of the unitary fabric element have different pile densities.

10. The thermal blanket of claim 1, wherein the first pile height is the same as the second pile height and the second pile density is greater than the first pile density.

## Patentansprüche

1. Wärmedecke (300, 350, 380, 400) Folgendes umfassend:
eine innere Stofflage (121, 431, 451, 621);
eine äußere Stofflage (122, 432, 452, 622); und
ein einteiliges Stoffelement zwischen der inneren Stofflage (121, 431, 451, 621) und der äußeren Stofflage (122, 432, 452, 622),
wobei das einteilige Stoffelement mehrere festgelegte, einzelne Bereiche mit unterschiedlichen Isolierungseigenschaften aufweist, wobei die einzelnen Bereiche auf Grundlage von Isolierungsbedürfnissen entsprechender Bereiche des Körpers eines Anwenders angeordnet sind,
**dadurch gekennzeichnet, dass**
mindestens zwei der festgelegten, einzelnen Bereiche mit unterschiedlichen Isolierungseigenschaften Folgendes umfassen:
in einem oder mehreren ersten, einzelnen Bereichen des einteiligen Stoffelements, Schlaufengarn, das eine erste Florhöhe und/oder eine erste Flordichte aufweist, wobei der eine oder die mehreren ersten einzelnen Bereiche einem oder mehreren Bereichen des Körpers des Anwenders entsprechen, die erste Isolierungsbedürfnisse aufweisen, und
in einem oder mehreren anderen einzelnen Bereichen des einteiligen Stoffelements, Schlaufengarn, das eine zweite Florhöhe und/oder eine zweite Flordichte aufweist,
wobei sich die zweite Florhöhe von der ersten Florhöhe unterscheidet und verhältnismäßig größer als diese ist und/oder sich die zweite Flordichte von der ersten Flordichte unterscheidet und verhältnismäßig größer als diese ist, wobei der eine oder die mehreren anderen einzelnen Bereiche einem oder mehreren Bereichen des Körpers des Anwenders entsprechen, die andere Isolierungsbedürfnisse aufweisen, die sich von den ersten Isolierungsbedürfnissen unterscheiden und verhältnismäßig größer als diese sind; und
dadurch, dass die äußere Lage (122, 432, 452, 622) mehrere festgelegte, einzelne Bereiche mit unterschiedlichen Isolierungseigenschaften umfasst, die den mehreren festgelegten, einzelnen Bereichen mit entgegengesetzten Isolierungseigenschaften des einteiligen Stoffelements entsprechen.

2. Wärmedecke nach Anspruch 1, wobei die äußere Stoffschicht (122, 432, 452, 622) ein Jacquardmuster umfasst, das als Außenfläche der Wärmedecke freiliegt.

3. Wärmedecke nach Anspruch 1, wobei die innere Stofflage (121, 431, 451, 621) und/oder die äußere Stofflage (122, 432, 452, 622) ein leichtes Gewebe oder einen leichten Strickstoff, das/der eine Dichte von etwa 2 oz/yd² bis etwa 6 oz/yd² (etwa 67,7 Gramm pro Quadratmeter bis etwa 203,1 Gramm pro Quadratmeter) aufweist, umfassen.

4. Wärmedecke nach Anspruch 1, wobei die innere Stofflage (121, 431, 451, 621) und/oder die äußere Stofflage (122, 432, 452, 622) einen Strickstoff umfassen, der eine Dichte von etwa 1,0 oz/yd² bis etwa 10,0 oz/yd² (etwa 33,8 Gramm pro Quadratmeter bis etwa 338 Gramm pro Quadratmeter) aufweist.

5. Wärmedecke nach Anspruch 1, wobei das einteilige Stoffelement mit der äußeren Stofflage (122, 432, 452, 622) und der inneren Stofflage (121, 431, 451, 621) über Nähen, Quilten oder Einsetzen der einteiligen Stofflage zwischen der äußeren und inneren Stofflage verbunden ist.

6. Wärmedecke nach Anspruch 1, wobei die innere Lage (121, 431, 451, 621) mehrere festgelegte, einzelne Bereiche mit unterschiedlichen Isolierungseigenschaften umfasst, die den mehreren festgelegten, einzelnen Bereichen mit unterschiedlichen Isolierungseigenschaften des einteiligen Stoffelements entsprechen.

7. Wärmedecke nach Anspruch 6, wobei die mehreren festgelegten, einzelnen Bereiche des inneren Stoffs (121, 431, 451, 621) Folgendes umfassen:
in einem oder mehreren ersten, einzelnen Bereichen des inneren Stoffs, die dem einen oder den mehreren ersten einzelnen Bereichen des einteiligen Stoffelements entsprechen, Schlaufengarn, das eine dritte Florhöhe und/oder eine dritte Flordichte aufweist, und
in einem oder mehreren anderen, einzelnen Bereichen des inneren Stoffs, die dem einen oder den mehreren anderen einzelnen Bereichen des einteiligen Stoffelements entsprechen, Schlaufengarn, das eine vierte Florhöhe und/oder eine vierte Flordichte aufweist, wobei sich die vierte Florhöhe von der dritten Florhöhe unterscheidet und verhältnismäßig größer als diese ist und/oder sich die vierte Flordichte von der dritten Flordichte unterscheidet und verhältnismäßig größer als diese ist.

8. Wärmedecke nach Anspruch 1, wobei die mehreren festgelegten, einzelnen Bereiche des äußeren Stoffs, Folgendes umfassen:
in einem oder mehreren ersten einzelnen Bereichen des äußeren Stoffs (122, 432, 452, 622), die dem einen oder den mehreren ersten einzelnen Bereichen des einteiligen Stoffelements entsprechen, Schlaufengarn, das eine dritte Florhöhe und/oder eine dritte Flordichte aufweist, und
in einem oder mehreren anderen, einzelnen Bereichen des äußeren Stoffs, die dem einen oder den mehreren anderen einzelnen Bereichen des einteiligen Stoffelements entsprechen, Schlaufengarn, das eine vierte Florhöhe und/oder eine vierte Flordichte aufweist, wobei sich die vierte Florhöhe von der dritten Florhöhe unterscheidet und verhältnismäßig größer als diese ist und/oder sich die vierte Flordichte von der dritten Flordichte unterscheidet und verhältnismäßig größer als diese ist.

9. Wärmedecke nach Anspruch 1, wobei das Schlaufengarn in unterschiedlichen Bereichen des einen oder der mehreren zweiten einzelnen Bereiche des einteiligen Stoffelements unterschiedliche Flordichten aufweisen.

10. Wärmedecke nach Anspruch 1, wobei die erste Florhöhe gleich der zweiten Florhöhe ist und die zweite Flordichte größer als die erste Flordichte ist.

## Revendications

1. Couverture thermique (300, 350, 380, 400), comprenant:
une couche de tissu intérieure (121, 431, 451, 621);
une couche de tissu extérieure (122, 432, 452, 622); et
un élément de tissu unitaire entre la couche de tissu intérieure (121, 431, 451, 621) et la couche de tissu extérieure (122, 432, 452, 622),
l'élément de tissu unitaire présentant une multiplicité de régions discrètes prédéterminées présentant des capacités d'isolation variables, les régions discrètes étant agencées en fonction des besoins d'isolation de régions correspondantes d'un corps d'utilisateur,
**caractérisée en ce qu'**au moins deux des régions discrètes prédéterminées présentant des capacités d'isolation variables comprennent, dans une ou plusieurs première(s) région(s) discrète(s) de l'élément de tissu unitaire, un fil bouclé présentant une première hauteur de poil et/ou une première densité de poils, lesdites une ou plusieurs première(s) région(s) discrète(s) correspondant à une ou plusieurs région(s) du corps de l'utilisateur qui présentent des premiers besoins d'isolation, et
dans une ou plusieurs autre(s) région(s) discrète(s) de l'élément de tissu unitaire, un fil bouclé présentant une second hauteur de poil et/ou une seconde densité de poils,
la seconde hauteur de poil étant différente de et relativement supérieure à la première hauteur de poil et/ou la seconde densité de poils étant différente de et relativement supérieure à la première densité de poils, lesdites une ou plusieurs autre(s) région(s) discrète(s) correspondant à une ou plusieurs région(s) du corps de l'utilisateur qui présentent d'autres besoins d'isolation différents de et relativement supérieurs aux premiers besoins d'isolation; et
**en ce que** la couche extérieure (122, 432, 452, 622) comprend une multiplicité de régions discrètes prédéterminées présentant des capacités d'isolation variables qui correspondent à la multiplicité de régions discrètes prédéterminées présentant des capacités d'isolation variables de l'élément de tissu unitaire.

2. Couverture thermique selon la revendication 1, dans laquelle la couche de tissu extérieure (122, 432, 452, 622) comprend un motif Jacquard à exposer en tant que surface extérieure de la couverture thermique.

3. Couverture thermique selon la revendication 1, dans laquelle la couche de tissu intérieure (121, 431, 451, 621) et/ou la couche de tissu extérieure (122, 432, 452, 622) comprend(-nent) un tissu tissé ou tricoté léger qui présente une densité d'environ 2 oz/yard² à environ 6 oz/yard² (d'environ 67,6 grammes par mètre carré à environ 203,1 grammes par mètre carré).

4. Couverture thermique selon la revendication 1, dans laquelle la couche de tissu intérieure (121, 431, 451, 621) et/ou la couche de tissu extérieure (122, 432, 452, 622) comprend(-nent) un tissu tricoté qui présente une densité d'environ 1,0 oz/yard² à environ 10,0 oz/yard² (d'environ 33,8 grammes par mètre carré à environ 338 grammes par mètre carré).

5. Couverture thermique selon la revendication 1, dans laquelle l'élément de tissu unitaire est connecté à la couche de tissu extérieure (122, 432, 452, 622) et à la couche de tissu intérieure (121, 431, 451, 621) par couture, piquage ou insertion de la couche de tissu unitaire entre les couches de tissu extérieure et intérieure.

6. Couverture thermique selon la revendication 1, dans laquelle la couche intérieure (121, 431, 451, 621) comprend une multiplicité de régions discrètes prédéterminées présentant des capacités d'isolation variables qui correspondent à la multiplicité de régions discrètes prédéterminées présentant des capacités d'isolation variables de l'élément de tissu unitaire.

7. Couverture thermique selon la revendication 6, dans laquelle la multiplicité de régions discrètes prédéterminées du tissu intérieur (121, 431, 451, 621) comprend:
dans une ou plusieurs première(s) région(s) discrète(s) du tissu intérieur qui correspondent auxdites une ou plusieurs première(s) région(s) discrète(s) de l'élément de tissu unitaire, un fil bouclé présentant une troisième hauteur de poil et/ou une troisième densité de poils, et
dans une ou plusieurs autre(s) région(s) discrète(s) du tissu intérieur qui correspondent auxdites une ou plusieurs autre(s) région(s) discrète(s) de l'élément de tissu unitaire, un fil bouclé présentant une quatrième hauteur de poil et/ou une quatrième densité de poils, la quatrième hauteur de poil étant différente de et relativement supérieure à la troisième hauteur de poil, et/ou la quatrième densité de poils étant différente de et relativement supérieure à la troisième densité de poils.

8. Couverture thermique selon la revendication 1, dans laquelle la multiplicité de régions discrètes prédéterminées du tissu extérieur comprend:
dans une ou plusieurs première(s) région(s) discrète(s) du tissu extérieur (122, 432, 452, 622) qui correspondent auxdites une ou plusieurs première(s) région(s) discrète(s) de l'élément de tissu unitaire, un fil bouclé présentant une troisième hauteur de poil et/ou une troisième densité de poils, et
dans une ou plusieurs autre(s) région(s) discrète(s) du tissu extérieur qui correspondent auxdites une ou plusieurs autre(s) région(s) discrète(s) de l'élément de tissu unitaire, un fil bouclé présentant une quatrième hauteur de poil et/ou une quatrième densité de poils, la quatrième hauteur de poil étant différente de et relativement supérieure à la troisième hauteur de poil, et/ou la quatrième densité de poils étant différente de et relativement supérieure à la troisième densité de poils.

9. Couverture thermique selon la revendication 1, dans laquelle le fil bouclé dans différentes régions desdites une ou plusieurs seconde(s) région(s) discrète(s) de l'élément de tissu unitaire présente des densités de poils différentes.

10. Couverture thermique selon la revendication 1, dans laquelle la première hauteur de poil est la même que la seconde hauteur de poil et la seconde densité de poils est supérieure à la première densité de poils.
